(19) Europäisches Patentamt
European Patent Office
Office européen des brevets

(11) EP 0 477 286 B1

(12) # EUROPEAN PATENT SPECIFICATION

(45) Date of publication and mention of the grant of the patent:
**21.08.1996 Bulletin 1996/34**

(21) Application number: **90910049.7**

(22) Date of filing: **14.06.1990**

(51) Int Cl.[6]: **C08L 1/00**

(86) International application number:
**PCT/US90/03253**

(87) International publication number:
**WO 90/15840 (27.12.1990 Gazette 1990/29)**

(54) **STABILIZED POLYACETAL COMPOSITIONS**
STABILISIERTE POLYACETALZUBEREITUNGEN
COMPOSITIONS DE POLYACETAL STABILISEES

(84) Designated Contracting States:
**DE FR GB**

(30) Priority: **15.06.1989 US 366850**
**15.06.1989 US 366558**
**22.02.1990 US 483606**
**11.06.1990 US 536369**
**11.06.1990 US 536376**

(43) Date of publication of application:
**01.04.1992 Bulletin 1992/14**

(73) Proprietor: **E.I. DU PONT DE NEMOURS AND COMPANY**
**Wilmington Delaware 19898 (US)**

(72) Inventors:
- **HAYES, Richard, Allen**
**Parkersburg, WV 26101 (US)**
- **KOSINSKI, Leonard, Edward, Raymond**
**Washington, WV 26181 (US)**
- **WAGMAN, Mark, Elliot**
**Wilmington, DE 19810 (US)**

(74) Representative: **Abitz, Walter, Dr.-Ing. et al**
**Patentanwälte Abitz & Partner**
**Postfach 86 01 09**
**81628 München (DE)**

(56) References cited:
**EP-A- 0 262 260**
**EP-A- 0 388 809**
**US-A- 3 219 727**
**US-A- 3 235 624**
**US-A- 3 406 129**
**US-A- 3 406 130**
**US-A- 4 111 887**
**US-A- 4 145 556**
**US-A- 4 640 949**
**US-A- 4 814 397**
**US-A- 4 837 400**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## BACKGROUND

### Technical Field

Recently, new types of stabilizers have been developed for polyacetal compositions, also commonly referred to as polyoxymethylene compositions. These new stabilizers are microcrystalline cellulose, fibrous cellulose, and non-meltable polymers containing formaldehyde reactive hydroxy groups or formaldehyde reactive nitrogen groups or both. These new stabilizers impart better melt processing stability to polyacetal compositions than do conventional nylon stabilizers.

It has now been found that the stability of the polyacetal compositions containing such new types of stabilizers can be improved even further. Specifically, for polyacetal compositions stabilized with microcrystalline or fibrous cellulose, even further improvements in the melt processing stability, as measured by thermally evolved formaldehyde tests, of the compositions can be achieved by the inclusion therein of certain polyamide based stabilizers and certain meltable hydroxy containing stabilizers. For polyacetal compositions stabilized with a non-meltable polymer stabilizer that contains formaldehyde reactive nitrogen groups or formaldehyde reactive hydroxy groups or both, the long term stability, as measured by air oven aging tests, of said compositions can be improved by either incorporating therein at least one amide-containing phenolic antioxidant or alternatively, incorporating therein at least one primary antioxidant along with at least one of certain conventional polyacetal thermal stabilizers, which are described in further detail below.

The compositions of the present invention are useful wherever enhanced melt processing stability and enhanced long term stability are desired.

### Background Art

The following references are cited as background art for the improved cellulose-stabilized polyacetal compositions of the present invention:

U.S. patent 4,766,168 discloses hydroxy-containing polymers or oligomers as stabilizers for polyacetal. Microcrystalline and fibrous cellulose, both of which are non-melting at the melt processing temperature of polyacetal, are not specifically disclosed within this reference. Further, there is no recognition in this reference of the advantages that are obtained with the specific stabilizer combination used in the present invention.

U.S. patent 4,722,662 discloses a process for manufacturing oxymethylene copolymers stabilized against thermal degradation, said process comprising the heating of the copolymer in a medium containing water and a disubstituted cellulose ether to hydrolyze unstable oxymethylene ends and then separating said oxymethylene copolymer from said aqueous medium containing a disubstituted cellulose ether. Disubstituted cellulose ethers are known thermoplastics.

U.S. patent 4,111,887 discloses polyoxymethylene molding compositions exhibiting improved physical properties comprising an admixture of a polyoxymethylene polymer, a fibrous reinforcement which can include cellulosic fiber, and a polycarbodiimide.

U.S. patent 3,406,129 discloses melt blends of moldable cellulose polymer having free hydroxyl groups with up to 50% of acetal polymer and U.S. patent 3,406,130 discloses colloidal dispersions of such blends with certain solvents for the cellulose polymer, which compositions are alleged to have improved melt strength and elongation. U.S. 3,406,129 specifically teaches that the use of greater than 50 weight percent polyacetal is detrimental to the melt blend. The cellulose disclosed in these references is not microcrystalline cellulose as it is moldable, and therefore, meltable at the melt processing temperature of polyacetal.

While some of the references discussed above disclose incorporating certain particular cellulosics into polyacetal compositions, none disclose the specific cellulosics used in the compositions of the present invention, nor do any disclose that microcrystalline or fibrous cellulose, in combination with at least one of certain co-stabilizer compounds, improves the thermal stability of polyacetal compositions.

The following references are cited as background for the improved non-meltable polymer stabilized polyacetal compositions of the present invention:

U.S. patent 4,098,843 discloses polyoxymethylene compositions containing a dispersion of (1) a semicrystalline polyamide having a melting temperature about 25°C higher than the melting temperature of the polyoxymethylene or (2) an amorphous polyamide having a glass transition temperature at least about 5°C higher than the melting temperature of the polyoxymethylene, either of which must be dispersed in a polymeric carrier resin that melts at or below the melt processing temperature of the polyoxymethylene.

U.S. patent 4,640,949 discloses polyoxymethylene compositions stabilized with a stabilizer blend of 50-97 percent thermoplastic polyurethane and 3-50 percent polyamide wherein the polyamide is dispersed within the polyurethane and the melting temperature of the polyamide is above the melting temperature of the polyoxymethylene.

Japanese patent application publication 42-7107 discloses a polyoxymethylene or copolymer composition comprising polyoxymethylene polymer or its copolymer and a copolymer of acrylamide and styrene or vinyl napthalene. It is required that the copolymer of acrylamide and styrene or vinyl napthalene have a melting point equal to or below the melting point of the polyoxymethylene polymer or copolymer.

Japanese patent publication koho 43-14329 discloses a method of stabilizing formaldehyde polymers consisting of an addition of a copolymer of acrylamide or an acrylamide derivative.

Japanese patent application publication Kohai 59-213752 discloses a polyacetal composition containing a fine poly-beta-alanine powder as a heat stabilizer, wherein the poly-beta-alanine is obtained by hydrogen transfer polymerization of acrylamide. Hydrogen transfer polymerization yields nylon-3, wherein the majority of formaldehyde reactive nitrogen groups are in the backbone of the polymer.

West German published application no. P3715117 discloses a thermal stabilizer for polyacetal purported to be improved over that of the Japanese 59-21375 reference. In this particular reference, there is disclosed as a thermal stabilizer for polyacetal a poly-beta-alanine compound containing:

(X) monomer units having the formula

$$-(CH_2CH_2CONH)-$$

and
(Y) monomer units having the formula

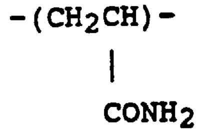

characterized in that the content of monomer units (Y) lies in the range from 1.4 to 10 mM per gram of the compound, preferably from 5 to 9 mM per gram of the compound.

U.S. patent 4,814,397 discloses a thermal stabilizer for polyacetal consisting of polymers and oligomers containing both hydroxyl groups and at least one other functional group that is a stronger Lewis base than the hydroxyl groups. Excessively high stabilizer viscosity (from molecular weight or chemical composition) is undesirable because it can make it difficult to disperse the stabilizer in the polyacetal.

U.S. patent 4,766,168, also cited above for cellulose-stabilized polyacetal compositions, discloses a thermal stabilizer for polyacetal consisting of hydroxyl containing polymers and hydroxyl containing oligomers. The importance of stabilizer particle size is not recognized in this reference.

U.S. patent 3,204,014 discloses a thermally stable polyacetal composition comprising a polyacetal and a ternary stabilizer system comprised of (a) a copolymer of N-vinylpyrrolidone and a monoolefinic monomer copolymerizable therewith, (b) a phenolic antioxidant, and (c) a diester of 3,3'-thiodipropionic acid. There is no recognition of the importance of the average particle size of the stabilizer or the non-meltable nature of the stabilizer.

U.S. patent 3,219,727 discloses polyoxymethylene compositions having enhanced heat stability due to the incorporation therein of a vinyl polymer having side chains containing the structure

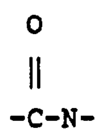

and particularly containing groups of the class consisting of amide groups and lactam groups. There is no recognition of the importance of small number average particle size in this reference, nor is there recognition that the stabilizer should be non-meltable.

U.S. patent 3,235,531 discloses a method for stabilizing oxymethylene copolymer. U.S. patent 3,210,322 discloses a method of treating a trioxane polymerization product comprised of an oxymethylene polymer, a trioxane polymerization catalyst, and unreacted trioxane. U.S. patent 3,236,929 discloses a method of injection molding oxymethylene copolymers. U.S. patent 3,418,280 discloses a method of stabilizing a polymer which is susceptible to thermal degradation because it contains monomeric units susceptible to degradation. In the immediately preceding four references, the oxymethylene polymer or copolymer may contain thermal stabilizers such as substituted polyacrylamides or compounds having 1-6 amide groups.

U.S. patent 4,230,606 discloses a melamine-formaldehyde polycondensate as a thermal stabilizer for polyoxymethylene. It is advantageous to form the melamine-formaldehyde precondensate in the presence of one or more protective colloids, which may include copolymers of acrylamide. There is no suggestion that copolymers of acrylamides

are stabilizers for polyacetal.

U.S. patent 4,522,735 discloses polyphosphoramidite oligomers as effective stabilizers to protect polymers from degradation due to heat. Polymeric stabilizers are not disclosed.

U.S. patent 4,555,357 discloses a polyacetal composition comprising polyacetal, carbon black, and an amide compound having a maximum of 6 repeat units.

U.S. patent 4,596,847 discloses a polyacetal composition comprising polyacetal, carbon black, and a nonionic surfactant.

U.S. patent 4,657,970 and U.S. patent 4,657,971 disclose compositions comprised of at least one thermoplastic polymer, such as polyoxymethylene, and at least one modified block copolymer comprised of at least one monovinyl substituted aromatic hydrocarbon polymer block A and at least one olefin compound polymer block B. The composition has improved impact resistance.

U.S. patent 3,215,671 discloses a process for crosslinking with ultraviolet light a mixture of polyoxymethylene and a functional derivative of a carboxylic acid selected from the group consisting of amides, esters, and imides.

U.S. patent 3,281,499 discloses a process for preparing polyoxymethylene copolymers from ethylenically unsaturated comonomers, including acrylamide. This is related to the preparation of a polyoxymethylene copolymer, not to stabilizing polyoxymethylene.

U.S. patent 3,338,872 discloses a polyoxymethylene copolymer prepared from formaldehyde and an acrylic monomer such as acrylamide and methacrylamide. This is related to the preparation of a polyoxymethylene copolymer, as opposed to a means to stabilize polyoxymethylene.

U.S. patent 3,366,561 discloses a method for producing polyoxymethylene copolymers by polymerizing trioxane with a copolymerizable monomer, which can be acrylamide. There is no recognition or teaching of the particular parameters of the present invention in this reference.

U.S. patent 3,470,135 discloses a process for preparing a stabilized polyoxymethylene comprised of polymerizing formaldehyde in the presence of a catalyst which is an organic compound of tetravalent tin.

U.S. patent 3,518,326 discloses thermosetting resins derived from acrylamide and formaldehyde. It does not disclose means by which to impart thermal stability to polyacetal.

U.S. patent 4,464,435 discloses a polyacetal composition comprised of (a) a polyacetal, (b) a carbonate, phosphate, acetate, or their mixture of a metal belonging to Group II of the Periodic Table, and (c) a polymer or copolymer selected from the group consisting of, amongst others, amides of acrylic acid or methacrylic acid. Component (c) is added for the purpose of preventing a molded product from encountering crack formation. There is no mention of improving thermal stability during melt processing.

None of the references discussed above disclose the particular embodiments of the present invention and specifically, none disclose the advantages that can be obtained when the mixed stabilizer systems or particular antioxidants of the present invention are incorporated into a polyacetal composition.

## SUMMARY OF THE INVENTION

The present invention relates to cellulose-stabilized polyacetal compositions having improved thermal stability. More specifically, it relates to polyacetal compositions stabilized with 0.05 to 5 weight percent of microcrystalline or fibrous cellulose and 0.05 to 4 weight percent of at least one co-stabilizer compound selected from the group consisting of polyamide-based co-stabilizers and co-stabilizers that are meltable polymers or meltable oligomers containing hydroxy groups, wherein the microcrystalline cellulose has an average particle size of 100 microns or less and the co-stabilizer meltable polymer or meltable oligomer containing hydroxy groups is substantially free of acidic materials, with the above weight percents being based upon the weight of the cellulose, the co-stabilizer compounds, and the polyacetal. The resultant polyacetal compositions are characterized as having improved thermal stability, on average, over that of polyacetal alone, polyacetal stabilized with polyamide-based stabilizers alone, and polyacetal stabilized only with stabilizers that are meltable polymers or meltable oligomers containing hydroxy groups.

The present invention further relates to non-meltable polymer stabilized polyacetal compositions having improved thermal stability. More specifically, it relates to polyacetal compositions stabilized with 0.05-3.0 weight percent of a non-meltable polymer stabilizer, described below, and 0.02-1.0 weight percent of at least one amide-containing phenolic antioxidant, with the above weight percents being based upon the weight of the polyacetal, the non-meltable polymer stabilizer, and the amide-containing phenolic antioxidant. Alternatively, the thermal stability of such non-meltable polymer stabilized polyacetal compositions can be improved by the inclusion therein of 0.05-3.0 weight percent of a non-meltable polymer stabilizer, 0.02-1.0 weight percent of at least one primary antioxidant, and 0.01-1.00 weight percent of at least one meltable co-stabilizer compound, with the above weight percents being based upon the weight of the polyacetal, the non-meltable polymer stabilizer, the anti-oxidant, and the meltable co-stabilizer compound.

The non-meltable polymer stabilizer contains formaldehyde reactive hydroxyl groups and/or formaldehyde reactive nitrogen groups, has a number average particle size, in the polyacetal, of less than ten microns, is non-meltable, and

is used to increase the melt processing stability of polyacetal. The meltable co-stabilizer compound used in such non-meltable polymer stabilized polyacetal compositions is selected from known meltable thermal stabilizers for polyacetal. The antioxidants, both primary and amide-containing phenolic, are known in the art. The meltable co-stabilizer and the antioxidants are used not to provide increased stability during processing but rather, to provide increased stability over time upon exposure to air. The presence of an amide-containing phenolic antioxidant or alternatively, a meltable co-stabilizer compound and a primary antioxidant, in the polyacetal composition results in a significant improvement in the long term, aerobic stability of the polyacetal composition.

## DETAILED DESCRIPTION OF THE INVENTION

This invention relates to improving the stability of cellulose-stabilized polyacetal compositions and to improving the stability of non-meltable polymer stabilized polyacetal compositions.

## I. CELLULOSE STABILIZED POLYACETAL COMPOSITIONS

It has been found that polyacetal compositions stabilized with a mixed stabilizer system of microcrystalline or fibrous cellulose and at least one co-stabilizer compound have improved thermal stability, as measured by lower evolution of formaldehyde. The mixed stabilizer system, which consists of microcrystalline or fibrous cellulose, said microcrystalline and fibrous cellulose being non-melting at the temperature at which polyacetal is melt processed, and at least one co-stabilizer compound has been found to not degrade as readily as the conventional nylon stabilizers. Further, the thermal stability of polyacetal compositions stabilized with the mixed cellulose-based stabilizer system of the present invention is, on average, better than the thermal stability, as measured by a thermally evolved formaldehyde test, of polyacetal compositions stabilized with only an individual component of the present stabilizer system.

To achieve the improvements mentioned above, i.e., lower evolution of formaldehyde, the cellulose-stabilized compositions of the present invention will consist essentially of (a) 0.05 to 5 weight percent microcrystalline or fibrous cellulose stabilizer, (b) 0.05 to 4 weight percent of at least one co-stabilizer compound selected from the group consisting of polyamides-based co-stabilizers and meltable hydroxy containing polymer or oligomer co-stabilizers, and (c) 91.0 to 99.9 weight percent of a polyacetal. Preferably, the cellulose-stabilized compositions of the present invention consist essentially of 0.05 to 2 weight percent of component (a) cellulose stabilizer, 0.05 to 2 weight percent of component (b) co-stabilizer compound, and 96.0 to 99.9 weight percent of component (c) polyacetal. Most preferably, the cellulose-stabilized compositions of the present invention consist essentially of 0.05 to 1 weight percent of component (a) cellulose stabilizer, 0.05 to 1 weight percent of component (b) co-stabilizer compound, and 98.0 to 99.9 weight percent of component (c) polyacetal. All the above weight percents are based upon the total weight of components (a), (b), and (c) only. If more than one co-stabilizer compound is used in the cellulose-stabilized compositions of the present invention, the total weight percent of such co-stabilizer compounds in the cellulose-stabilized compositions should be within the range disclosed above for component (b).

### I(a). Component (c): Polyacetal

The term "polyacetal" as used herein includes homopolymers of formaldehyde or of cyclic oligomers of formaldehyde, the terminal groups of which are end-capped by esterification or etherification, and copolymers of formaldehyde or of cyclic oligomers of formaldehyde and other monomers that yield oxyalkylene groups with at least two adjacent carbon atoms in the main chain, the terminal groups of which copolymers can be hydroxyl terminated or can be end-capped by esterification or etherification.

The polyacetals used in the compositions of the present invention can be branched or linear and will generally have a number average molecular weight in the range of 10,000 to 100,000, preferably 20,000 to 70,000. The molecular weight can conveniently be measured by gel permeation chromatography in m-cresol at 160°C using a Du Pont PSM bimodal column kit with nominal pore size of 60 and 1000 A. Although polyacetals having higher or lower molecular weight averages can be used, depending on the physical and processing properties desired, the polyacetal molecular weight averages mentioned above are preferred to provide optimum balance of good mixing of the various ingredients to be melt blended into the composition with the most desired combination of physical properties in the molded articles made from such compositions.

As indicated above, the polyacetal can be either a homopolymer, a copolymer or a mixture thereof. Copolymers can contain one or more comonomers, such as those generally used in preparing polyacetal compositions. Comonomers more commonly used include alkylene oxides of 2-12 carbon atoms and their cyclic addition products with formaldehyde. The quantity of comonomer will not be more than 20 weight percent, preferably not more than 15 weight percent, and most preferably about 2 weight percent. The most preferred comonomer is ethylene oxide. Generally polyacetal homopolymer is preferred over copolymer because of its greater stiffness. Preferred polyacetal homopolymers include those whose terminal hydroxyl groups have been end-capped by a chemical reaction to form ester or ether groups, preferably acetate or methoxy groups, respectively.

I(b). Components (a) and (b): The Cellulose-based Stabilizer System

The stabilizer system used in the cellulose-stabilized compositions of the present invention is comprised of component (a) microcrystalline or fibrous cellulose and component (b) at least one co-stabilizer compound selected from polyamide-based co-stabilizers and certain meltable hydroxy containing polymer and oligomer co-stabilizers.

I(b)(i). Component (a): Microcrystalline and Fibrous Cellulose

The component (a) cellulose stabilizer is specifically either microcrystalline or fibrous cellulose. Microcrystalline cellulose is preferred. Both microcrystalline and fibrous cellulose are derived from naturally occurring cellulose and are non-melting at the melt processing temperature of polyacetal.

Microcrystalline cellulose is known in the art and is commercially available. It is described in detail in U.S. patent 3,023,104, incorporated herein by reference, and it is referred to therein as "cellulose crystallite aggregates". Microcrystalline cellulose is also described in "Hydrolysis and Crystallization of Cellulose", Industrial and Engineering Chemistry, vol. 42, 502-507 (1950).

Consistent with that which is taught in U.S. patent 3,023,104, the microcrystalline cellulose useful in the cellulose-stabilized compositions of the present invention can be obtained from a commercial source or can be prepared by acid hydrolysis of cellulose. In either case, the microcrystalline cellulose should meet the purity requirements set forth below. In the acid hydrolysis of cellulose, the acid dissolves any amorphous portion of the original cellulose chains. The undissolved portion remaining from such hydrolysis is in a particulate, non-fibrous or crystalline form, said form being the result of the disruption of the continuity of the fine structures between the crystalline and amorphous regions of the original cellulose. The undissolved portion, which is in crystalline form, is known to be non-melting at the melt processing temperature of polyacetal. The melt processing temperature of polyacetal generally does not exceed 280°C. The methods of preparing microcrystalline cellulose by the acid hydrolysis of cellulose are known to those in the art and are, for example, described in U.S. patent 3,023,104, column 2 and the examples.

The microcrystalline cellulose used in the cellulose-stabilized compositions of the present invention has a certain level-off degree of polymerization. Level-off degree of polymerization is described in U.S. patent 3,023,104. More specifically, it is described therein as being the point at which the cellulose that is subjected to acid hydrolysis reaches, after a certain period of time, a substantially constant molecular weight. In other words, it is the point at which the number of repeating units or monomers, sometimes designated anhydroglucose units, which make up the cellulosic material, becomes relatively constant. It is at this point that it is apparent that the degree of polymerization of the material has leveled off, hence the name level-off degree of polymerization.

Consistent with what is disclosed in U.S. patent 3,023,104, the microcrystalline cellulose useful in the cellulose-stabilized compositions has a preferred average level-off degree of polymerization of 125 to 375 anhydroglucose units. Ideally, within this range all of the material should have the same degree of polymerization but as this is difficult, if not impossible, to achieve, it is preferred that at least 85% of the material have an actual degree of polymerization not less than 50 and not more than 550. More preferably, within the average level-off degree of polymerization of 125 to 375, at least 90% of the material should have an actual degree of polymerization within the range of 75 to 500, and it is still more preferred that at least 95% of the material has an actual degree of polymerization in the range of 75 to 450. The more preferred average level-off degree of polymerization for the microcrystalline cellulose useful herein is in the range of 200 to 300, of which material at least 90% has an actual degree of polymerization in the range of 75 to 550. The most preferred average level-off degree of polymerization for the microcrystalline cellulose useful herein ranges from 175 to 225.

As taught in U.S. patent 3,023,104, microcrystalline cellulose will usually have an average particle size of 300 microns. For purposes of this invention, the average particle size is the point at which 50% of the particles are greater than average and 50% of the particles are less than average. Average particle size can be determined by standard techniques, such as microscopic inspection, gravitational sedimentation, sieve analysis, and electron microscopy. The preferred method of determining particle size is gravitational sedimentation.

It has been found that, for cellulose-stabilized compositions, stability increases as the average particle size of the microcrystalline cellulose decreases. As such, although microcrystalline can have an average particle size of about 300 microns, it is preferred that the average particle size of the microcrystalline cellulose used herein be 100 microns or less, more preferably 50 microns or less, even more preferably 25 microns or less, and most preferably 10 microns or less.

Fibrous cellulose is known in the art and is commercially available. It can be prepared from naturally occurring cellulose by techniques readily available to those skilled in the art. For example, a fibrous cellulose can be made by

pulverizing wood pulp and then subsequently purifying it to meet the purity requirements described below. It is also a naturally occurring substance, an example of which is cotton linter. Fibrous cellulose generally exists in the form of flat ribbons. The width and thickness of these flat ribbons of fibrous cellulose is not considered critical in achieving the results exemplified herein. In general, however, the width of these flat ribbons will be, on average, approximately 25 microns and the thickness of these flat ribbons will be, on average, 6 microns. The length of the flat ribbons of the fibrous cellulose is also not considered critical in achieving the results exemplified herein. Fibrous cellulose is commercially available over a range of average fiber lengths, including from 300 microns down through less than 22 microns. Although average fiber length is not considered critical, it is expected that stability results will improve as average fiber length decreases due to the increase that such a decrease in average fiber length causes in the surface area of the fibrous cellulose stabilizer.

Another type of naturally occurring fibrous cellulose can be obtained from cellulose-producing bacteria, such as acetobacter and gluconobacter, via standard fermentation processes. After the fermentation process, the bacterial cells are destroyed via a hot caustic treatment and bacterial cellulose fibers are isolated by a series of washing and de-watering steps. The bacterial cellulose fibers that result can occur as intricately cross-linked networks or as distinct fibers. The thickness of these bacterial cellulose fibers is typically about 0.1 microns.

It is important that both the microcrystalline cellulose and the fibrous cellulose used in the cellulose-stabilized compositions herein be substantially free of compounds which destabilize acetal resins. Destabilizing impurities that are likely to occur in commercially available microcrystalline and fibrous cellulosics that are useful in the compositions of the present invention can be assayed via (1) the pH of an aqueous suspension of 1-10 weight percent microcrystalline or fibrous cellulose, (2) the non-volatile ash content of the microcrystalline or fibrous cellulose, and/or (3) the heavy metal content of the microcrystalline or fibrous cellulose.

More specifically, it is recommended that, for optimum results, the pH of an aqueous suspension of 1-10 weight percent of the microcrystalline or fibrous cellulose useful in the compositions of the present invention be in the range of 5.5-7 for homopolymer polyacetal and in the range of 5.5-8 for copolymer polyacetal. It is more preferred that the pH of the suspension be in the range of 5.5-7 for both homopolymer and copolymer polyacetal. It is recommended that the non-volatile ash content (ashing conducted at greater than or equal to 800°C) of the microcrystalline cellulose or fibrous cellulose be less than 0.25%, more preferably less than 0.10%, and most preferably less than 0.02%. It is also recommended that the heavy metal content of the microcrystalline cellulose and the fibrous cellulose be less than 10 ppm. For maximum thermal stability results, it is generally recommended that the non-volatile ash content and the heavy metal content of the microcrystalline cellulose and the fibrous cellulose be minimized.

<u>I(b)(ii). Component (b): Co-stabilizer Compound</u>

The term "co-stabilizer compound" as used in the cellulose-stabilized compositions herein means those compounds selected from the group consisting of polyamide-based co-stabilizers and certain co-stabilizers that are meltable polymers or meltable oligomers containing hydroxy groups. By "meltable" it is meant that the polymer or oligomer containing hydroxy groups has a melting point or glass transition temperature less than the temperature at which the polyacetal is melt processed or alternatively, it is meant that said co-stabilizer has a melt flow rate greater than the one-tenth that of the polyacetal at the temperature at which the polyacetal is melt-processed. The melting point and glass transition temperature can be determined by standard DSC analysis techniques and the melt flow rate can be determined by techniques known to those in the art, such as ASTM-D 1238. Acceptable techniques are described below in the section on non-meltable polymer stabilizers. The component (b) co-stabilizer compound may be one co-stabilizer compound or it may be more than one co-stabilizer compound.

The polyamide-based co-stabilizers useful in the cellulose-stabilized compositions herein are known in the art and are further known to be a thermal stabilizers for polyacetal. The polyamide-based stabilizers may be meltable or non-meltable at the temperature at which the polyacetal is melt processed. Such polyamide co-stabilizer compounds are commercially available and can be prepared by techniques readily available to those skilled in the art.

Specific polyamide-based co-stabilizers useful in the compositions of the present invention are described in several U.S. patents, including Alsup et al, U.S.P. 2,993,025 and Johnson, U.S.P. 4,098,843, each of which is incorporated herein by reference. A preferred polyamide-based co-stabilizer is nylon 66 predispersed in a carrier resin (as described in Johnson, U.S.P. 4,098,843). Another preferred polyamide-based co-stabilizer is a 33/23/43 terpolymer of nylon 66, nylon 6/10, and nylon 6, respectively. Yet another preferred polyamide-based co-stabilizer is an 85/15 copolymer of nylon 66 and nylon 6, respectively, predispersed in a carrier resin, such as, for example, a thermoplastic polyurethane carrier resin. Polyamide copolymers of the immediately preceding type are described in detail in Wagman, U.S.P. 4,640,949, incorporated herein by reference.

The certain meltable polymers or meltable oligomers containing hydroxy groups co-stabilizers useful in the cellulose-stabilized compositions herein are known in the art and are described in U.S. patent 4,766,168 and U.S. patent 4,814,397, each of which is incorporated herein by reference.

Specifically, the meltable polymer or meltable oligomer containing hydroxy groups co-stabilizer described in U.S. patent 4,766,168 is a polymer or oligomer containing hydroxy groups wherein the atoms in the backbone to which the hydroxy groups are attached, either directly or indirectly, are separated from each other by not more than twenty chain atoms. Preferably, the meltable polymer or meltable oligomer containing hydroxy groups co-stabilizer compound is an hydroxy containing polymer or oligomer containing on average at least one hydroxy group per each twenty carbon atoms in the backbone of the polymer or oligomer and not more than one hydroxy group per carbon atom in the backbone. More preferably, the ratio of carbon atoms in the backbone will be 1:2-1:10, and most preferably 1:2-1:5. Specific preferred meltable polymers containing hydroxyl groups co-stabilizers include poly(vinyl alcohol), poly(ethylene vinyl alcohol), hydroxyesters of poly(meth)acrylates, such as poly(hydroxypropyl methacrylate) or poly(hydroxyethyl methacrylate), and vinyl alcohol/methylmethacrylate copolymers. The preferred meltable polymer containing hydroxyl groups co-stabilizer is poly(ethylene vinyl alcohol).

Specifically, the meltable polymer or meltable oligomer containing hydroxy groups co-stabilizer described in U.S. 4,814,397 is a polymer or oligomer containing both hydroxy groups and at least one other functional group that is a stronger Lewis base than the hydroxy groups wherein the atoms in the backbone of the polymer or oligomer to which the hydroxy groups are attached, indirectly or directly, are separated, on average, by not more than twenty chain atoms. Examples of the other functional groups include amides, amines, ureas, and urethanes. Amides and amines are preferred; amides are most preferred. Specific preferred examples of this particular meltable hydroxy containing co-stabilizer include copolymers of hydroxypropyl methacrylate with acrylamide, methacrylamide, dimethylaminoethyl methacrylate, or vinyl 2-pyrrolidone.

I(c). Purity Recommendations for the Components

It is important that both the microcrystalline or fibrous cellulose and the co-stabilizer compounds used in the cellulose-stabilized compositions herein be substantially free of compounds which destabilize acetal resins. Heavy metal content, ash content, and pH range for microcrystalline and fibrous cellulose has been detailed above. Other purity recommendations are detailed below.

In stabilizing ester-capped or partially ester-capped polyacetal homopolymer, it is recommended that the microcrystalline and fibrous cellulose and the co-stabilizers be substantially free of basic materials, such as metals, ammonium hydroxide, sodium acetate, and other alkali and alkali earth acetates which can destabilize the polyacetal. Basic impurities in microcrystalline and fibrous cellulose should preferably be removed to levels of not more than 200 ppm and most preferably to not more than 10 ppm while basic impurities in the co-stabilizers should preferably be removed to levels of not more than 50 ppm and most preferably to not more than 10 ppm. In stabilizing polyacetal copolymer or homopolymer that is substantially all ether-capped, higher concentrations of basic materials in the microcrystalline and fibrous cellulose and the co-stabilizers can be tolerated. In addition, it should be understood that if the impurity in the microcrystalline and/or fibrous cellulose or the co-stabilizer is only weakly basic, relatively higher amounts can be tolerated.

In using the microcrystalline and fibrous cellulose and the co-stabilizers in stabilizing both homopolymer and copolymer polyacetal, it is also recommended that acidic impurities in the microcrystalline and fibrous cellulose and the co-stabilizer compound should be minimized. For microcrystalline and fibrous cellulose, acidic impurities should preferably be removed to levels of not more than 250 ppm and most preferably to not more than 10 ppm while for the co-stabilizer, such impurities should preferably be removed to not more than 50 ppm and most preferably to not more than 10 ppm. As with the basic impurities, it should be understood that if the impurity in the microcrystalline and/or fibrous cellulose or the co-stabilizer is only weakly acidic, relatively higher amounts can be tolerated.

Accordingly, when such acidic and/or basic impurities are present in the microcrystalline and/or fibrous cellulose and/or the co-stabilizers in amounts large enough to cause destabilization of the cellulose-stabilized polyacetal compositions, then the microcrystalline and/or fibrous cellulose and/or the co-stabilizer should be purified before it is introduced into the cellulose-stabilized compositions herein. Volatile impurities in the microcrystalline and/or fibrous cellulose and/or the co-stabilizer can be removed by use of a vacuum oven. Non-volatile impurities in the microcrystalline and/or fibrous cellulose and/or the co-stabilizer can be purified by washing the microcrystalline and/or fibrous cellulose or the co-stabilizer with an appropriate liquid, such as, for example, water.

I(d). Other Components

It should be understood that the cellulose-stabilized polyacetal compositions of the present invention can include, in addition to the polyacetal, the microcrystalline or fibrous cellulose, and the at least one co-stabilizer compound, other ingredients, modifiers and additives as are generally used in polyacetal molding resins, including co-stabilizers other than those described herein, anti-oxidants, pigments, colorants, toughening agents, reinforcing agents, uv stabilizers, hindered amine stabilizers, nucleating agents, lubricants, glass fibers, silicone oil, polytetrafluoroethylene powder or

fiber, and fillers. It should also be understood that some pigments and colorants can, themselves, adversely affect the stability of polyacetal compositions.

II. NON-MELTABLE POLYMER STABILIZED POLYACETAL COMPOSITIONS

This invention further relates to improving the long term stability of polyacetal compositions stabilized for melt processing purposes with a non-meltable polymer stabilizer by the inclusion therein of an amide-containing phenolic antioxidant or alternatively, by the inclusion therein of a primary antioxidant and a meltable co-stabilizer compound.

II(a). Non-Meltable Polymer Stabilized Compositions Improved With An Amide-Containing Phenolic Antioxidant

Polyacetal compositions containing non-meltable polymer stabilizers have been found to possess excellent processing stability. However, said compositions may undergo loss of physical properties over time upon exposure to air. Due to the excellent processing stability that these compositions possess, it is highly desirous to use these compositions in commercial applications. As such, it is also desirous to improve upon the long term stability, or the retention of properties over time, for these non-meltable polymer stabilized polyacetal compositions.

It has been found that a particular antioxidant will significantly improve upon the long term stability, as evidenced by the long term retention of properties, of polyacetal compositions containing a non-meltable polymer stabilizer. It is important to note that while antioxidants are known to provide enhanced stability to many compositions, they are not always readily transferable from one polyacetal composition to another. The effectiveness of an antioxidant can be dependent upon several variables, such as, for example, the particular base polymer in the composition and the particular stabilizer in the composition. Further, interactions can occur between the antioxidant and the stabilizer, or any other component in the composition, that can limit the effectiveness of the antioxidant or that will result in a composition with unacceptable properties.

Specifically, it has been found that the antioxidant that is most effective in improving the long term stability of polyacetal compositions containing at least one non-meltable polymer stabilizer is an amide-containing phenolic antioxidant. When the non-meltable polymer stabilized polyacetal composition contains at least one amide-containing phenolic antioxidant, the composition retains its overall physical properties to a much greater and more significant extent than it does when there is no antioxidant present or when the antioxidant added is a non-amide-containing phenolic antioxidant.

The non-meltable polymer stabilized compositions that are improved with an amide-containing phenolic antioxidant consist essentially of (a) 0.05-3.0 weight percent of at least one non-meltable polymer stabilizer, (b) 0.02-1.0 weight percent of at least one amide-containing phenolic antioxidant, and (c) 96.0-99.93 weight percent of the polyacetal. Unless otherwise specified, all weight percentages disclosed in this paragraph are based upon the weight of the polyacetal, the non-meltable polymer stabilizer, and the amide-containing phenolic antioxidant. Preferably, the composition contains 0.15-1.5 weight percent, most preferably 0.2-1.0 weight percent, of the component (a) non-meltable polymer stabilizer. The amide-containing phenolic antioxidant is preferably present at 0.02-0.5 weight percent, most preferably 0.05-0.25 weight percent. Optionally, non-amide-containing phenolic antioxidant may be incorporated into the composition at 0.05-0.50 weight percent, preferably 0.05-0.25, and most preferably, 0.10-0.20 weight percent of the composition, said weight percent being based upon the weight of the polyacetal, the non-meltable polymer stabilizer, and all antioxidant types.

It has been further found that the long term stability of polyacetal compositions containing a non-meltable polymer stabilizer can be improved with the addition to the composition of at least one primary antioxidant and a minor amount of at least one meltable co-stabilizer for polyacetal.

II(a)(i). Component (c): Polyacetal

The component (c) polyacetal polymer useful in these non-meltable polymer stabilized compositions is identical to the component (c) polyacetal polymer described above for cellulose-stabilized polyacetal compositions.

II(a)(ii). Component (a): Non-meltable Polymer Stabilizer

The non-meltable polymer stabilizer used herein is a homopolymer or copolymer containing formaldehyde reactive nitrogen groups, formaldehyde reactive hydroxyl groups, or both formaldehyde reactive nitrogen and formaldehyde reactive hydroxyl groups. By "formaldehyde reactive" it is meant that the hydroxyl group contains an oxygen with a hydrogen atom bonded to it and the nitrogen group contains a nitrogen with one or two hydrogen atoms bonded to it. Formaldehyde will react with the -OH or the -NH bonds of the non-meltable polymer stabilizer. These reactive sites are referred to herein as formaldehyde reactive sites. It is preferred that the non-meltable polymer stabilizer contain

formaldehyde reactive nitrogen or hydroxyl groups having the maximum number of formaldehyde reactive sites. For example, a non-meltable polymer stabilizer containing formaldehyde reactive nitrogen groups wherein there are two hydrogen atoms attached directly to the nitrogen atom (i.e., two formaldehyde reactive sites in the group) is preferred over one containing formaldehyde reactive nitrogen groups wherein there is only one hydrogen atom attached directly to the nitrogen atom (i.e., one formaldehyde reactive site in the group).

The non-meltable polymer stabilizer has at least ten repeat units. It preferably has a weight average molecular weight of greater than 5,000, most preferably greater than 10,000. Higher weight average molecular weights are most preferred and further, such higher weight average molecular weights may be advantageous for reducing mold deposit formation.

The non-meltable polymer stabilizer is further non-meltable at the temperature at which the polyacetal is melt processed. By the term "non-meltable", it is meant that the non-meltable polymer stabilizer has its "major melting point" above the temperature at which the polyacetal is melt processed and thus remains essentially a solid during melt processing of the polyacetal. Alternatively, a non-meltable polymer stabilizer is "non-meltable" if the non-meltable polymer stabilizer has its "major melting point" below the temperature at which the polyacetal is melt processed but, it does not undergo significant melt flow at that temperature. The melt flow rate of the non-meltable polymer stabilizer may not be significant because the non-meltable polymer stabilizer has a high viscosity, attributed to, for example, high molecular weight or crosslinking.

In the case where the non-meltable polymer stabilizer has its "major melting point" below the temperature at which the polyacetal is melt processed, the melt flow rate of the non-meltable polymer stabilizer, as measured in accordance with ASTM-D 1238, is preferably less than one-tenth that of the polyacetal. The "major melting point" of the non-meltable polymer stabilizer can be determined on a differential scanning calorimeter. "Major melting point" is the temperature at which the amount of heat absorbed, by the non-meltable polymer stabilizer, is greatest; i.e., it is the temperature at which the polymer stabilizer shows the greatest endotherm. As an example of how to measure melt flow rate, and in accordance with ASTM-D 1238, the melt flow rate should be measured at 200°C under a load of 2.16 kilograms. The non-meltable polymer stabilizer should be dried at about 90°C for about 12 hours prior to measuring the melt flow rate. The non-meltable polymer stabilizer should then be loaded into the plugged melt indexer and heated to test temperature over a six minute time period, after which time the plug is released. The melt flow rate is determined over three minute intervals. The technique for measuring melt flow rate is further discussed below, after the disclosure relating to the preparation of the non-meltable polymer stabilizer.

The major melting point of the non-meltable polymer stabilizer can, for example, be determined on a DUPONT Model 9900 DIFFERENTIAL SCANNING CALORIMETER (DSC) in a nitrogen atmosphere. To eliminate the possible effect of small amounts of moisture or solvents, each non-meltable polymer stabilizer should be first heated to about 140°C and held there for about 10 minutes. The samples should then be cooled to about 25°C and then heated at a rate of about 20°C/minute up to about 350°C. On the particular DSC above, the temperature at which endotherms occur will be given. Also, the amount of heat absorbed, in Joules/gram, at each respective endotherm will be given. The major melting point is the temperature at which the greatest amount of heat, in Joules/gram, is absorbed.

Polyacetals are usually melt processed at melt temperatures of about 170-260°C, preferably 185-240°C, most preferably 200-230°C. The non-meltable polymer stabilizer should be non-meltable at the particular temperature at which the polyacetal is melt processed.

The non-meltable polymer stabilizer must further have a number average particle size of less than 10 microns after melt processing with the polyacetal. It should also have a number average particle size of less than 10 microns before melt processing with the polyacetal. It should be understood that a high degree of loose agglomeration of particles in the non-meltable polymer stabilizer may occur during the preparation and isolation of the non-meltable polymer stabilizer, such as, for example, during the drying of the non-meltable polymer stabilizer. In order for one to obtain a true and accurate measurement of the number average particle size, prior to melt processing, for a non-meltable polymer stabilizer containing a high degree of loose agglomerates, the loose agglomerates should be broken up prior to measuring or, alternatively, they should be discounted in making said measurement. Whether or not a non-meltable polymer stabilizer contains a high degree of loose agglomerates can be determined by standard techniques of transmission electron microscopy. The details of determining the number average particle size, both before and after melt processing, are disclosed below.

The formaldehyde reactive hydroxyl groups can be incorporated into the non-meltable polymer stabilizer by using an appropriate hydroxyl containing monomer, such as, for example, hydroxyl alkyl acrylates or methacrylates. Alternatively, the formaldehyde reactive hydroxyl groups can be generated on the non-meltable polymer stabilizer by transforming another group into a hydroxyl group, such as, for example, by hydrolysis of esters or epoxides, or by reduction of carbonyl groups. Regardless of the methods by which the formaldehyde reactive hydroxyl groups are incorporated, the non-meltable polymer stabilizer prepared therefrom must be non-meltable, or capable of being made non-meltable, at the temperature at which the polyacetal is melt processed.

Similarly, the formaldehyde reactive nitrogen groups can be incorporated into the non-meltable polymer stabilizer

by using an appropriate nitrogen containing monomer, such as, for example, acrylamide and methacrylamide. Preferred nitrogen containing monomers are those that result in the polymer stabilizer containing formaldehyde reactive nitrogen groups wherein there are two hydrogen atoms attached to the nitrogen. The particularly preferred monomer is acrylamide which, when polymerized, results in a polymer stabilizer having substantially all of the formaldehyde reactive nitrogen groups attached directly as a side chain of the polymer backbone or indirectly as a side chain of the polymer backbone. Alternatively, the formaldehyde reactive nitrogen groups can be generated on the non-meltable polymer stabilizer by modification of the polymer or copolymer. The formaldehyde reactive nitrogen groups may be incorporated by either method as long as the resultant polymer is non-meltable, or is capable of being made non-meltable, at the temperature at which the polyacetal is melt processed.

The quantity of the formaldehyde reactive hydroxyl or nitrogen groups in the non-meltable polymer stabilizer must be such that the atoms in the backbone to which the formaldehyde reactive groups are attached, either directly or indirectly, are separated from each other (i.e., connected to each other) by not more than twenty chain atoms. Preferably, the non-meltable polymer stabilizer will contain at least one formaldehyde reactive hydroxyl or nitrogen group per each twenty carbon atoms in the backbone of the polymer. More preferably, the ratio of formaldehyde reactive hydroxyl or nitrogen groups to carbon atoms in the backbone will be 1:2-1:10, most preferably 1:2-1:5.

The formaldehyde reactive nitrogen groups should further be present in the non-meltable polymer stabilizer such that the amount of the formaldehyde reactive nitrogen groups as, or part of, the side chains of the non-meltable polymer stabilizer backbone is at least 3 times, preferably at least ten times, the amount of the formaldehyde reactive nitrogen groups, if any, present in the backbone of the non-meltable polymer stabilizer. In other words, the formaldehyde reactive nitrogen groups, attached directly or indirectly to the atoms in the backbone of the non-meltable stabilizer, should be at least three times as great, preferably at least ten times as great, as those in the backbone of the non-meltable polymer stabilizer, if such are present. The formaldehyde reactive nitrogen groups attached directly or indirectly to the side of the polymer backbone are preferably present in a substantially greater quantity than the formaldehyde reactive nitrogen groups, if any, present in the the polymer backbone. Most preferably, nearly one hundred percent of the formaldehyde reactive nitrogen groups are attached to the sides of the polymer backbone.

The non-meltable polymer stabilizer can be a homopolymer or a copolymer, provided it is non-meltable. It is preferred that the non-meltable polymer stabilizer be polymerized from acrylamide or methacrylamide monomer by free radical polymerization and that the polymer stabilizer prepared therefrom consist of at least 75 mole percent of a unit of the form

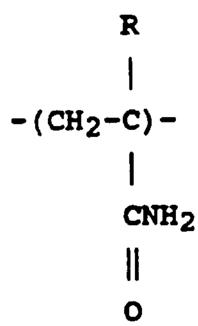

where R=hydrogen or methyl. More preferably, it consists of at least 90 mole percent of the above units, even more preferably, it consists of at least 95 mole percent of the above units, and most preferably, it consists of at least 99 mole percent of the above unit.

The non-meltable polymer stabilizer may be a copolymer in that it is polymerized from more than one monomer. The comonomer may or may not contain formaldehyde reactive nitrogen and/or formaldehyde reactive hydroxyl groups. Examples of other monomers that may be thus incorporated include styrene, ethylene, alkyl acrylates, alkyl methacrylates, N-vinylpyrrolidone, and acrylonitrile. The non-meltable polymer stabilizer that is a copolymer must still be non-meltable. It further must possess the required quantity of formaldehyde reactive hydroxyl and/or nitrogen groups, in the required ratio, and it must have the required number average particle size. The comonomer preferably should be added such that it does not unduly minimize the number of moles of formaldehyde reactive groups per gram of polymer stabilizer. Further, it should not unduly minimize the number of formaldehyde reactive sites per gram of polymer stabilizer.

Specific preferred non-meltable polymer stabilizers that are copolymeric include copolymers of hydroxypropyl methacrylate with acrylamide, methacrylamide, or dimethylaminoethyl methacrylate.

When the non-meltable polymer stabilizer has a high number of formaldehyde reactive hydroxyl groups in comparison to the number of formaldehyde reactive nitrogen groups or, alternatively, when it has only formaldehyde reactive hydroxyl groups, it may be advantageous to include other groups in the stabilizer that are basic. This is because for

optimum performance as a stabilizer for polyacetal, the stabilizer should be reactive with both formaldehyde and acid. Preferably, these other groups are nitrogen containing groups, such as amines, amides, ureas, and urethanes.

The non-meltable polymer stabilizer must have a number average particle size of less than 10 microns, preferably less than 5 microns, and most preferably less than 2 microns, as measured before processing in polyacetal. Along with the polymer stabilizer being non-meltable, the number average particle size of the non-meltable polymer stabilizer is important in achieving the improved processing stability for polyacetal demonstrated herein. If the polymer stabilizer particle size is, on average, too large, then the interaction between the polyacetal and the polymer stabilizer can be negligible and the polymer stabilizer may have greatly reduced effectiveness. Stability is related to the interaction that occurs between the polyacetal and the polymer stabilizer and as such, it is desirable to have good interaction between the polyacetal and the non-meltable polymer stabilizer. Maximizing the surface area/gram of the non-meltable polymer stabilizer increases interaction between the polymer stabilizer and the polyacetal. The surface area/gram of polymer stabilizer increases as the particle size of the polymer stabilizer decreases. Thus, a non-meltable polymer stabilizer with small particle size is highly desired.

If the non-meltable polymer stabilizer particle size is, on average, on the order of 10-100 microns, then the stabilizer may impart stability to the polyacetal but the physical properties of the articles manufactured from the polyacetal may be reduced. Relatively large particles may also cause uneven surface in the articles manufactured from polyacetal containing stabilizer with large particles. In some cases, it may however be desirable to produce articles with surfaces having reduced surface gloss. In that case, a stabilizer of large particle size, more near the upper limit of the number average particle size, may actually be preferred.

The small number average particle size of the non-meltable polymer stabilizer may be obtained directly during the polymerization of the monomer or comonomers. To obtain the small average particle size, the stabilizer polymerization is carried out by conventional dispersion polymerization methods in an organic media or by conventional emulsion polymerization methods in water, the techniques of each of which are well known in the art. Whether the polymerization technique is dispersion polymerization or emulsion polymerization, the non-meltable polymer stabilizer prepared therefrom should be insoluble in the polymerization media. Thus, the particular media selected for polymerization is dependent upon the particular monomer or comonomers chosen and the polymer that will result therefrom. For example, where acrylamide or methacrylamide is a monomer for polymerization, the preferred media is a lower alkyl alcohol. The polymerization may be by addition or condensation polymerization or free radical polymerization. The most preferred method is one that will result in the number of formaldehyde reactive sites in the formaldehyde reactive group being maximized. Generally, free radical polymerization is the preferred method of polymerization. Non-meltable polymer stabilizer prepared from acrylamide is most preferably prepared by free radical polymerization. In any event, the polymerization method must be such that it results in a non-meltable polymer stabilizer having formaldehyde reactive nitrogen groups or formaldehyde reactive hydroxyl groups in the quantities and amounts previously defined.

In some cases, the non-meltable polymer stabilizer produced by the polymerization to small particle size will have a sufficient major melting point or have a sufficiently low melt flow rate such that it is non-meltable as polymerized. In other cases, the polymer stabilizer may not be non-meltable as polymerized but, prior to or during the melt processing in polyacetal, it will crosslink, due to, for example, application of heat, to a sufficiently high molecular weight such that it has a low melt flow rate and is thus considered non-meltable at the temperature at which the polyacetal is melt processed. Whether the polymer stabilizer will be non-meltable as polymerized or will become non-meltable after polymerization depends upon the nature of the particular monomer or comonomers being polymerized.

In some cases, the polymer stabilizer produced by the polymerization of the monomer or comonomers will not be non-meltable as polymerized and it will not become non-meltable subsequent to polymerization. This can be easily determined by measuring the melting point or melt flow rate of the stabilizer after it has been compounded with polyacetal. In such cases, it is desirable to include at least one monomer that crosslinks the polymer stabilizer either during polymerization or at a later time. Monomers that will cause crosslinking during polymerization include polyfunctional, unsaturated monomers, such as, for example, acrylates, methacrylates, acrylamides, and methacrylamides, and derivatives thereof. Specifically preferred monomers are ethylene glycol dimethacrylate, N,N'-methylenebisacrylamide, and 1,4-butanediol diacrylate. Monomers that may cause crosslinking after polymerization of the stabilizer polymer is complete include, for example, glycidyl methacrylate, acrylic acid, methacrylic acid, and derivatives thereof. The crosslinking monomer should be added in an amount that is sufficient to yield a polymer stabilizer that is non-meltable at the temperature at which the polyacetal is melt processed.

During the polymerization to small particle size in an organic media, with or without a crosslinking monomer, it can be advantageous to have a dispersing aid present. During the polymerization to small particle size in an emulsion, it can be advantageous to have an emulsifier present. Dispersing aids and the methods of preparing them are well known in the art. A description of the methods of making and choosing dispersing aids is included in Dispersion Polymerization in Organic Media (by K. E. J. Barrett, New York: John Wiley & Sons, 1975). Particularly preferred dispersing aids include polyethylene glycol and its derivatives, methyl methacrylate copolymers, and poly(oxypropylene)-poly(oxyethylene) glycol block copolymers. Emulsifiers and the method of preparing them are well known in the art. Emulsion polymerizations are discussed in Emulsion Polymerization Theory and Practice (by D. C. Blackley, New York: John Wiley & Sons, 1975).

The dispersant or dispersant solution or the emulsifier is added to the polymerization reaction vessel simultaneously with the monomer and polymerization medium, and, where applicable, comonomer and crosslinking monomer. When a dispersant or dispersant solution or emulsifier is added to the stabilizer, it is advantageous remove the dispersant or dispersant solution or emulsifier from the stabilizer polymer by washing the stabilizer polymer, after it is prepared, with a solvent in which the dispersant solution or dispersant or emulsifier is soluble but in which the polymer stabilizer is insoluble. This is particularly true if the dispersant or dispersant solution or emulsifier is known to destabilize polyacetal. If the dispersant or dispersant solution or emulsifier is not known to destabilize polyacetal, it may be advantageous to leave it in the stabilizer polymer as it can act to reduce any agglomeration of particles that may occur during the drying of the polymer stabilizer.

Further, regarding the measurement of the melt flow rate, it is known that water and other liquids or low molecular weight solids have substantial effects on melt flow. Depending upon the technique used to isolate the non-meltable polymer stabilizer, dispersant, when used, may be retained with the stabilizer polymer. To obtain an accurate melt flow rate, the dispersant should be removed by washing the stabilizer with a liquid that is a solvent for the dispersant and is a non-solvent for the stabilizer prior to measuring the melt flow rate. After washing, the stabilizer should be redried prior to testing for melt flow rate.

The small number average particle size of the non-meltable polymer stabilizer may alternatively be obtained subsequent to the polymerization of the monomer or comonomers, while the polymer stabilizer is still in the polymerization medium or is in solution. In such cases, the small number average particle size of the stabilizer may be obtained by adding a crosslinking monomer to the polymer stabilizer in the polymerization medium, after which the stabilizer polymer becomes insoluble in the medium. Alternatively, the small number average particle size of the stabilizer may be obtained by adding a solvent in which the stabilizer polymer is insoluble to the polymer stabilizer in the polymerization medium. Similarly, the polymer stabilizer in the polymerization medium may be added to a solvent in which the polymer stabilizer is insoluble. Small number average particle size can be obtained by other known means of separating the polymer from the polymerization medium. It can be advantageous to use dispersing aids or emulsifiers such as those previously described to separate the stabilizer polymer from the polymerization medium.

Any method may be used to prepare the polymer stabilizer provided that such method will yield a polymer stabilizer having small particles, with a number average size less than 10 microns, prior to melt processing with polyacetal. Further, the small particles should be non-meltable at the temperature at which the polyacetal is melt processed and should not coalesce or agglomerate to such an extent that they are not readily dispersible in the polyacetal melt.

The number average particle size of the non-meltable polymer stabilizer before it is melt processed with polyacetal can be measured by any means capable of determining number average particle size. The preferred means is the MICROTRAC II SMALL PARTICLE ANALYZER (ANALYZER), manufactured by Leeds & Northrup. By this method, the polymer stabilizer is added to a liquid, such as, for example, 2-propanol, and shaken by hand to disperse the polymer stabilizer in the liquid. In some cases, a high concentration of loose agglomerates may have occurred during the preparation of the polymer stabilizer. In such cases, more intensive mixing may be desired in order to break up the loose agglomerates. An example of a device capable of providing such intensive mixing is a "POLYTRON" (Brinckman Instruments). From this dispersion of non-meltable polymer stabilizer in liquid, the number average particle size for the polymer stabilizer is determined by the ANALYZER.

An example of a specific ANALYZER is the Model 158705/158708, which is equipped with a 17 channel detector system that covers a particle size range of 0.17 to 60 microns. The ANALYZER prints the percent of particle volume that has a diameter of less than the given detector channel. From the diameter and particle volume, the number average particle size is calculated. In this calculation, the particle diameter for a given detector channel is approximated by the channel diameter. The number of particles in each channel is calculated by the following formula:

$$N = (10000V\%)/(0.5236d^3/6)$$

where

N = number of particles in a given channel
V% = volume of particles in that channel
d = channel diameter

By summing the number of particles in all 17 channels, the total number of particles is calculated. By multiplying the number of particles in a channel by 100, and dividing the result by the total number of particles, the percent of particles in each channel is calculated. To calculate the total number percent having a diameter of less than that channel, starting with the smallest diameter channel, a cumulative number percent is calculated by adding the number percent in all channels that have a diameter less than or equal to that particular channel. From this cumulative sum of number

percents, the median number average particle size is calculated.

The number average particle size of the stabilizer after it has been melt processed with polyacetal should be less than 10 microns, preferably less than 5 microns, and most preferably less than 2 microns. It can be measured by any technique capable of measuring number average particle size for particles in a polymer. The preferred method of measuring the number average particle size of the stabilizer in the polyacetal is by transmission electron microscopy.

The following illustrates how the number average particle size of the non-meltable polymer stabilizer can be determined after it has been melt-processed and formed into pellets with polyacetal. A pellet is sectioned using a Reichert-Jung Ultracut E model FC4E diamond knife microtome. Using standard -90°C cryo-ultramicrotomy techniques, 90-120 nanometer sections of the pellet are microtomed. The microtomed sections, still on the diamond blade, are picked off the diamond blade and mounted directly onto a copper transmission electron microscopy (TEM) grid. The sections, as mounted, are placed in a Denton vacuum evaporator model D V-502 and, under high vacuum, coated with a thin layer of spectroscopically pure carbon less than 20 nanometers thick. The carbon coating gives acetal sections more stability when exposed to the electron beam inside the transmission electron microscope. The carbon coated sections on the TEM grids are then examined using a Zeiss EM10CR transmission electron microscope. Images are recorded at nominal magnifications of 1000x, 2520x, and 5000x on 70 mm (Kodak 5302) film, and printed. Magnification calibrations performed on an annual basis using a commercially available grating replica are combined with the photographic enlargement factor to give the final image magnification, which includes 4640x, 11800x, and 23000x. The number average particle size is determined from the recorded images by measuring, with a ruler, the diameter of at least 50 particles, including large particles and any particles that may have agglomerated. Agglomerated particles are treated as one particle. The number average particle size is calculated by averaging the values obtained from the at least 50 particles.

II(a)(iii). Component (b): Amide-containing Phenolic Antioxidant

The component (b) antioxidant useful herein is amide-containing and is also phenolic. The amide may be primary, secondary, or tertiary. The phenol should be sterically hindered. As the examples below will show, an antioxidant that contains both amide and phenol functionalities imparts significantly better long term stability to polyacetal compositions containing a non-meltable polymer stabilizer than does a non-amide-containing phenolic antioxidant alone.

Amide-containing phenolic antioxidants are known in the art. Examples of amide-containing phenolic antioxidants include, but are not limited to, amides of beta-(3,5-di-tert-butyl-4-hydroxy-phenyl) propionic acid, such as, for example, 1,3,5-tris-3,5-di-tert-butyl-4-hydroxyphenyl-propionyl)hexahydro-s-triazine and N,N'-hexamethylene bis(3,5-di-tert-butyl-4-hydroxyhydrocinnamide). Amide-containing phenolic antioxidants also include 2,2'-oxalyldiamidobisethyl-3-(3,5-di-tert-butyl-4-hydroxyphenyl) propionate. The preferred amide-containing antioxidant is N,N'-hexamethylene bis (3,5-di-tert-butyl-4-hydroxyhydrocinnamide).

The improvement in the long term stability of the non-meltable polymer stabilized polyacetal composition occurs when the amide-containing phenolic antioxidant is present alone or as part of a mixture of antioxidants. The mixture can consist of more than one amide-containing phenolic antioxidant or optionally it can consist of a combination of an amide-containing phenolic antioxidant and a non-amide-containing antioxidant. In any event, there must be present in the polyacetal composition 0.02-1.0 weight percent of the amide-containing phenolic antioxidant, said weight percent being based upon the weight of the polyacetal, the non-meltable polymer stabilizer, and the amide-containing phenolic antioxidant.

The non-amide-containing antioxidants are primary, or chain terminating, antioxidants that do not contain amide functionality. These antioxidants are also frequently referred to as radical scavengers. The majority of primary antioxidants are sterically hindered phenols or secondary aromatic amines. Preferably, the non-amide-containing antioxidant is of the sterically hindered phenol type.

Examples of non-amide-containing sterically hindered phenolic antioxidants that may be added along with the amide-containing phenolic antioxidant to the composition include, but are not limited to, the following:

Simple antioxidants, such as 2,6-dialkylphenols, including, for example, 2,6-di-tert-butyl-4-methylphenol, 2-tert-butyl-4,6-dimethylphenol, 2,6-di-tert-butyl-4-methoxymethylphenol and 2,6-di-octadecyl-4-methyl phenol.

Derivatives of alkylated hydroquinones, such as for example, 2,5-di-tert-butyl-hydroquinone, 2,5-di-tert-amylhydroquinone, 2,6-di-tert-butyl-hydroquinone, 2,6-di-tert-butyl-4-hydroxy-anisole, 3,5-di-tert-butyl-4-hydroxy-anisole, 3,5-di-tert-butyl-4-hydroxyphenyl stearate, and bis-(3,5-di-tert-butyl-4-hydroxyphenyl) adipate.

Alkylidene-bisphenols, such as, for example, 2,2'-methylene-bis-(6 tert-butyl-4-methylphenol), 2,2'-methylene-bis-(6 tert-butyl-4-ethylphenol), 4,4'-methylene-bis-(6 tert-butyl-2-methylphenol), 4,4'-methylene-bis-(2,6-tert-butyl-phenol), 2,6-di-tert-butyl-5-methyl-2-hydroxybenzyl)-4-methylphenol, 2,2'-methylene-bis-[4-methyl-6-(4-methylcyclohexyl)-phenol], 1,1-bis-(3,5-dimethyl-2-hydroxyphenyl)-butene, 1,1-bis-(5-tert-butyl-4-hydroxy-2-methylphenyl)-butane, 2,2-bis-(3,5-di-tert-butyl-4-hydroxyphenyl)-propane, 1,1,3-tris-(5-tert-butyl-4-hydroxy-2-methylphenyl)-butane, 2,2-bis-(5-tert-butyl-4-hydroxy-2-methylphenyl)-4-n-dodecylmercaptobutane, 1,1,5,5-tert-butyl-4-hydroxy-2-methylphenyl)-pentane and ethylene glycol bis [3,3-bis-(3'-tert-butyl-4'-hydroxyphenyl)-butyrate].

O- and N-benzyl compounds, such as, for example, 3,3',5,5'-tetra-tert-butyl-4,4'-dihydroxydibenzyl ether and tris-(3,5-di-tert-butyl-4-hydroxybenzyl)-amine.

Hydroxybenzylated malonates, such as, for example, dioctadecyl 2,2-bis-(3,5-di-tert-butyl-2-hydroxybenzyl)-malonate, dioctadecyl 2-(3-tert-butyl-4-hydroxy-5-methylbenzyl)-malonate, di-dodecylmercapto-ethyl, 2,2-bis-(3,5-di-tert-butyl-4-hydroxybenzyl)-malonate and di-[4-(1,1,3,3-tetramethylbutyl)-phenyl] 2,2-bis-(3,5-di-tert-butyl-4-hydroxybenzyl)-malonate.

Hydroxybenzyl-aromatic compounds, such as, for example, 1,3,5-tris-(3,5-di-tert-butyl-4-hydroxybenzyl)-2,4,6-trimethylbenzene, 1,4-bis-(3,5-di-tert-butyl-4-hydroxybenzyl)-2,3,5,6-tetramethylbenzene and 2,4,6-tri-(3,5-di-tert-butyl-4-hydroxybenzyl)-phenol.

s-Triazine compounds, such as, for example, 2,4,6-tris-(3,5-di-tert-butyl-4-hydroxyphenoxy)-s-triazine, 2,4,6-tris-(3,5-di-tert-butyl-4-hydroxyphenylethyl)-s-triazine and 1,3,5-tris-(3,5-di-tert-butyl-4-hydroxybenzyl)isocyanurate.

Esters of beta-(3,5-di-tert-butyl-4-hydroxyphenyl)propionic acid with monohydric or polyhydric alcohols, such as, for example, with methanol, ethanol, octadecanol, 1,6-hexanediol, 1,9-nonanediol, ethylene glycol, 1,2-propanediol diethylene glycol, triethylene glycol, neopentylglycol, pentaerythritol, trimethylhexanediol, trimethylolethane, triethylolpropane, and tris-hydroxyethyl isocyanurate.

Esters of beta(5-tert-butyl-4-hydroxy-3-methylphenyl)propionic acid with monohydric or polyhydric alcohols, such as for example, with methanol, ethanol, octadecanol, 1,6-hexanediol, 1,9-nonanediol, ethylene glycol, 1,2-propanediol, diethylene glycol, triethylene glycol, neopentylglycol, pentaerythritol, trimethylhexane-diol, trimethyolethane, trimethylolpropane, and tris-hydroxyethyl isocyanurate.

Esters of 3,5-di-tert-butyl-4-hydroxyphenylacetic acid with monohydric or polyhydric alcohols, such as, for example, with methanol, ethanol, octadecanol, 1,6-hexanediol, 1,9-nonanediol, ethylene glycol, 1,2-propanediol, diethylene glycol, neopentylglycol, pentaerythritol, trimethylhexanediol, trimethylolethane, trimethylol- propane, and tris-hydroxyethyl isocyanurate.

Examples of secondary aromatic amine antioxidants that may be added along with the amide-containing phenolic antioxidant to the composition include, but are not limited to, the following:

Diarylamines, such as N-phenyl-alpha-naphthylamine, p-oriented styrenated diphenylamine, and octylated diphenylamines.

p-Phenylenediamines, such as N,N'-diphenyl-p-phenylenediamine and N,N'-di-beta-naphthyl-p-phenylenediamine.

It is preferred that the non-amide-containing antioxidant be selected from triethylene glycol bis(3-(3'-tert-butyl-4'-hydroxy-5'-methylphenyl)propionate); tetrakis(methylene(3,5-di-tert-butyl-4-hydroxyhydrocinnamate))methane; tris (methylene(3,5-di-tert-butyl-4-hydroxyphenyl)-1,3,5-cyanuric acid; and 1-octadecanol(3,5-di-tert-butyl-4-hydroxyhydrocinnamate).

II(b). Non-Meltable Polymer Stabilized Compositions Improved with a Meltable Co-stabilizer Compound and a Primary Antioxidant

The non-meltable polymer stabilized compositions that are improved with a meltable co-stabilizer compound and a primary antioxidant consist essentially of (a) 0.05-3.0 weight percent of at least one non-meltable polymer stabilizer, (b) 0.01-1.0 weight percent of at least one meltable co-stabilizer compound, (c) 0.02-1.0 weight percent of at least one primary antioxidant, and (d) 95-99.92 weight percent of a polyacetal. The preferred compositions consist essentially of 0.15-1.5 weight percent of the at least one non-meltable polymer stabilizer, 0.01-0.50 weight percent of the at least one meltable co-stabilizer compound, 0.02-0.50 weight percent of the at least one primary antioxidant, and 97.5-99.8 weight percent of polyacetal. The most preferred composition consists essentially of 0.2-1.0 weight percent of the at least one non-meltable polymer stabilizer, 0.05-0.30 weight percent of the at least one meltable co-stabilizer compound, 0.05-0.25 weight percent of the at least one primary antioxidant, and 98.4-99.7 weight percent of the polyacetal. All the above weight percents are based upon the weight of the non-meltable polymer stabilizer, the meltable co-stabilizer compound, the primary antioxidant, and the polyacetal.

II(b)(i). Component (d): Polyacetal

The component (d) polyacetal useful herein is identical to the component (c) polyacetal described above for cellulose-stabilized polyacetal compositions.

II(b)(ii). Component (a): Non-meltable Polymer Stabilizer

The component (a) non-meltable polymer stabilizer is identical to the component (a) non-meltable polymer stabilizer described above for the non-meltable polymer stabilized compositions improved with an amide-containing phenolic antioxidant.

III(b)(iii). Component (b): Meltable Co-stabilizer Compound

The component (b) "co-stabilizer" compound useful in the non-meltable polymer stabilized compositions herein is any compound that is a meltable thermal stabilizer for polyacetal. By the term "meltable", it is meant that the co-stabilizer has a melting point or glass transition temperature less than the temperature at which the polyacetal is melt processed or alternatively, it is meant that the co-stabilizer has a melt flow rate greater than one-tenth that of the polyacetal at the temperature at which the polyacetal is melt processed. The melting point and glass transition temperature can be determined by DSC analysis, as described previously. The melt flow rate can also be determined as previously described.

Meltable thermal stabilizers for polyacetal are well known in the art. Examples of such meltable thermal stabilizers for polyacetal include, but are not limited to, polyamides, amide-containing compounds, urethanes, ureas, amine-containing compounds, and hydroxy-containing compounds. It is important to note that highly basic compounds may have a de-stabilizing effect on polyacetal homopolymer and therefore, any such compound should be purified or reduced in basicity to the appropriate levels prior to incorporating it into the polyacetal homopolymer composition. This is discussed in further detail below.

Polyamide stabilizers are well known in the art. The use of a polyamide as a thermal stabilizer for polyacetal, along with the method for preparing such polyamides, is disclosed in the following patents: U.S.P. 2,993,025; U.S.P. 2,966,467; U.S.P. 3,001,966; U.S.P. 3,235,624; U.S.P. 3,288,885; U.S.P. 3,103,499; U.S.P. 4,744,934; U.S.P. 3,960,984; U.S.P. 4,098,843; and U.S.P. 3,116,267. The preferred polyamide is a 33/23/43 weight percent terpolymer of nylon 66, nylon 6/10, and nylon 6, respectively.

Amide-containing compounds are well known in the art. The use of an amide-containing compound as a thermal stabilizer for polyacetal, along with the method for preparing such a compound, is disclosed in the following patents: U.S.P. 3,574,786; U.S.P. 3,592,873; U.S.P. 3,355,514; U.S.P. 3,787,353; and U.S.P. 3,156,669.

Urethanes and ureas are well known in the art. Their use as a polyacetal thermal stabilizer, along with the method of making the urethane or urea, is disclosed in the following patents: U.S.P. 4,780,498; U.S.P. 2,893,972; and U.S.P. 3,144,431.

Amine-containing compounds are well known in the art. The use of amine-containing compounds as polyacetal thermal stabilizers, along with the method for preparing said compound, is disclosed in the following patents: U.S.P. 3,133,896; U.S.P. 2,920,059; U.S.P. 2,376,354; U.S.P. 2,810,708; U.S.P. 4,751,272; U.S.P. 3,406,222; U.S.P. 3,249,582; U.S.P. 3,448,169; and U.S.P. 3,442,850.

Hydroxy-containing materials are well known in the art. The use of such materials, along with the method for preparing such materials, is disclosed in the following patents, each of which is incorporated herein by reference: U.S.P. 4,766,168; U.S.P. 2,936,298; U.S.P. 2,966,476; U.S.P. 2,376,354; U.S.P. 3,219,621; U.S.P. 4,555,357; U.S.P. 3,240,753; and U.S.P. 3,459,789. The preferred hydroxy-containing compound is that which is disclosed in U.S.P. 4,766,168. Specifically, the hydroxy containing compound disclosed in U.S. 4,766,168 is a hydroxy containing polymer or oligomer wherein the atoms in the backbone of the polymer or oligomer to which the hydroxy groups are attached, directly or indirectly, are separated from each other, on average, by not more than twenty chain atoms and wherein the hydroxy containing polymer or oligomer is substantially free of acidic materials. Specific hydroxy-containing compounds disclosed in U.S.P. 4,766,168 include poly(vinyl alcohol), poly(ethylene vinyl alcohol), hydroxyesters of poly (meth)acrylates, such as poly(hydroxypropyl methacrylate), and vinyl alcohol/methylmethacrylate copolymers. The preferred hydroxy-containing compound for the compositions of the present invention is poly(ethylene vinyl alcohol).

The meltable co-stabilizer may be a single compound or it may be a mixture of more than one meltable co-stabilizer. The preferred co-stabilizer for the non-meltable polymer stabilized polyacetal compositions of the present invention is either a 33/23/43 weight percent terpolymer of nylon 66, nylon 6/10, and nylon 6, respectively or the hydroxy-containing polymer described in U.S.P. 4,766,168. If the co-stabilizer is added as a mixture, it is preferred that it be a 1:1-1:5 mixture of the 33/23/43 weight percent terpolymer of nylon 66, nylon 6/10, and nylon 6, respectively with the hydroxy-containing polymer described in U.S.P. 4,766,168.

II(b)(iv). Component (c): Primary Antioxidant

The component (c) primary antioxidant used in the non-meltable polymer stabilized compositions along with a meltable co-stabilizer compound herein is known in the art. Primary antioxidants are also referred to in the art as chain terminating antioxidants or radical scavengers. The majority of primary antioxidants are sterically hindered phenols or secondary aromatic amines. It is preferred that the primary antioxidant used in the compositions of the present invention be of the sterically hindered phenol type.

Examples of primary antioxidants that are sterically hindered phenolic antioxidants include, but are not limited to simple antioxidants, derivatives of alkylated hydroquinones, alkylidene-bisphenols, O- and N-benzyl compounds, hydroxybenzylated malonates, hydroxybenzyl-aromatic compounds, s-triazine compounds, amides of beta-(3,5-di-tert-butyl-4-hydroxyphenyl) propionic acid, esters of beta-(3,5-di-tert-butyl-4-hydroxyphenyl)propionic acid with monohydric or polyhydric alcohols, esters of beta(5-tert-butyl-4-hydroxy-3-methylphenyl)propionic acid with monohydric or polyhydric alcohols, and esters of 3,5-di-tert-butyl-4-hydroxyphenylacetic acid with monohydric or polyhydric alcohols. Specific examples of each type of sterically hindered phenolic antioxidants useful herein include those provided above in section II(a)(iii) for non-amide-containing primary antioxidants.

The preferred primary antioxidants that are sterically hindered phenolic antioxidants are amides of beta-(3,5-di-tert-butyl-4-hydroxyphenyl) propionic acid, such as, for example, 1,3,5-tris-3,5-di-tert-butyl-4-hydroxyphenylpropionyl)-hexahydro-s-triazine and N,N'-hexamethylene bis(3,5-di-tert-butyl-4-hydroxyhydrocinnamide); 2,2'-oxalyldiamidobisethyl-3-(3,5-di-tert-butyl-4-hydroxyphenyl) propionate; triethylene glycol bis(3-3'-tert-butyl-4'-hydroxy-5'-methyl(phenyl) proprionate); and tetrakis(methylene (3,5-di-tert-butyl-4-hydroxyhydrocinnamate)) methane. The most preferred antioxidant is N,N'-hexamethylene bis(3,5-di-tert-butyl-4-hydroxyhydrocinnamide).

Examples of primary antioxidants that are secondary aromatic amine antioxidants include, but are not limited to, diarylamines and p-phenylenediamines.

The primary antioxidant may be added as one single primary antioxidant or it may be added as a mixture of more than one primary antioxidant. Preferably, the mixture is comprised only of sterically hindered phenolic type primary antioxidants. Regardless of whether the primary antioxidant is added alone or as a mixture, the total weight percent of primary antioxidant in the polyacetal composition must range from 0.02-1.0 weight percent, said weight percent being based upon the weight of the non-meltable polymer stabilizer, the primary antioxidant(s), the co-stabilizer, and the polyacetal.

II(c). Non-meltable Polymer Stabilized Compositions: Other Components and Purity Recommendations

It should be understood that the non-meltable polymer stabilized compositions described herein can additionally contain other ingredients, modifiers, and additives as are generally used in polyacetal molding resins, including pigments, colorants, UV stabilizers, light stabilizers, toughening agents, polytetrafluoroethylene fibers or powder, nucleating agents such as boron nitride and talc, lubricating agents such as silicone oil, and ethylene bis-stearamide, and fillers, such as glass, carbon black, and talc. It should also be understood that some pigments, colorants, and other additives can, themselves, adversely affect the stability of polyacetal compositions.

It is important that the non-meltable polymer stabilizer, the meltable co-stabilizer compound, the antioxidant, and any other ingredient, modifier, or additive used in the non-meltable polymer stabilized polyacetal compositions of the present invention be substantially free of compounds or impurities which destabilize acetal resins.

In stabilizing ester-capped or partially ester-capped polyacetal homopolymer, the components to be added to the polyacetal should be substantially free of basic materials which can destabilize the polyacetal. Basic impurities should preferably be removed to levels of not more than 50 ppm and most preferably to not more than 10 ppm. In stabilizing polyacetal copolymer or homopolymer that is substantially all ether-capped, higher concentrations of basic materials can be tolerated. In addition, it should be understood that if the impurity is only weakly basic relatively higher amounts can be tolerated.

In stabilizing both homopolymer and copolymer polyacetal, acidic impurities in the components of the polyacetal composition should be minimized. Acidic impurities should preferably be removed to levels of not more than 50 ppm and most preferably to not more than 10 ppm. As with basic impurities, it should be understood that if the impurity is only weakly acidic, relatively higher amounts can be tolerated.

If acidic and/or basic impurities are present in any of the components to be added to the polyacetal in amounts large enough to cause destabilization of the polyacetal composition, then the component should be purified before it is introduced into the compositions of the present invention. For example, the non-meltable polymer stabilizers used in the compositions of the present invention can be purified by washing with an

III. METHOD OF PREPARATION

The compositions of the present invention can be prepared by mixing the components with the polyacetal polymer at a temperature above the melting point of the polyacetal component of the compositions using any intensive mixing device conventionally used in preparing thermoplastic polyacetal compositions, such as rubber mills, internal mixers such as "Banbury" and "Brabender" mixers, single or multiblade internal mixers with a cavity heated externally or by friction, "Ko-kneaders", multibarrel mixers such as "Farrel Continuous Mixers", injection molding machines, and extruders, both single screw and twin screw, both co-rotating and counter rotating. These devices can be used alone or in combination with static mixers, mixing torpedoes and/or various devices to increase internal pressure and/or the

intensity of mixing, such as valves, gates or screws designed for the purpose. Extruders are preferred. Of course, such mixing should be conducted at a temperature below which significant degradation of the polyacetal component of the composition will occur. Generally, polyacetal compositions are melt processed between 170°C to 280°C, preferably between 185°C to 240°C, and most preferably 195°C to 225°C.

Shaped articles can be made from the compositions of the present invention using any of several common methods, including compression molding, injection molding, extrusion, blow molding, rotational molding, melt spinning and thermoforming. Injection molding is preferred. Examples of shaped articles include sheet, profiles, rod stock, film, filaments, fibers, strapping, tape tubing and pipe. Such shaped articles can be post treated by orientation, stretching, coating, annealing, painting, laminating and plating. Such shaped articles and scrap therefrom can be ground and remolded.

Processing conditions used in the preparation of the compositions of the present invention and shaped articles made therefrom include melt temperatures of about 170-280°C, preferably 185-240°C, most preferably 200-230°C. When injection molding the compositions of the present invention, it is preferred that the mold be as cold as possible consistent with the intricacy of the shape being produced. Generally, the mold temperature will be 10-120°C, preferably 10-100°C, and most preferably about 50-90°C.

## EXAMPLES

In the following examples, there are shown specific embodiments of the present invention and certain comparisons with embodiments of control experiments outside the limits of the present invention. It will be seen that the compositions of the present invention are characterized by improved thermal stability. All parts and percentages are by weight, and all temperatures are in degrees Celsius unless otherwise specified. Measurements not originally in SI units have been so converted and rounded where appropriate.

### I. COMPONENTS OF THE EXAMPLES

#### a. Polyacetal Polymer Component

The polyacetal polymers used in the examples below were as follows:

(a) Polyacetal A - an acetate end-capped homopolymer having a number average molecular weight of about 40,000 and
(b) Polyacetal B - an acetate end-capped homopolymer having a number average molecular weight of about 33,000.

#### b. Microcrystalline Cellulose Stabilizer Component

The microcrystalline cellulose stabilizers used in the examples below were as follows:

(a) "MC3" was a commercially available microcrystalline cellulose which was ground via standard techniques of air jet milling to an average particle size of about 3 microns,
(b) "MC6" was a commercially available microcrystalline cellulose having an average particle size of about 6 microns,
(c) "MC11" was a commercially available microcrystalline cellulose which was air jet milled by standard techniques to an average particle size of about 11 microns,
(d) "MC20" was a commercially available microcrystalline cellulose having an average particle size of about 20 microns,
(e) "MC50" was a commercially available microcrystalline cellulose having an average particle size of about 50 microns, and
(f) "MC100" was a commercially available microcrystalline cellulose having an average particle size of about 100 microns.

The average level-off degree of polymerization for each microcrystalline cellulose used in the examples ranged from 190 to 200. Each microcrystalline cellulose used in the examples had less than 10 ppm heavy metals and less than 0.05% ash. The pH of a 10% aqueous suspension of each microcrystalline cellulose used in the examples ranged from about 5.5-7.

c. Fibrous Cellulose Stabilizer Component

The fibrous cellulose stabilizers used in the examples below were as follows:

"FC1" was a commercially available fibrous cellulose having an average fiber length of about 300 microns, an ash content of about 0.16%, and a pH, measured on a 5% aqueous suspension of the fibrous cellulose, of 5.95.

"FC2" was a commercially available fibrous cellulose having an average fiber length of less than 90 microns, an ash content of 0.15%, and a pH, measured on both 5% and 10% aqueous suspensions of the fibrous cellulose, of 5.2

d. Non-meltable Polymer Stabilizer Component

The non-meltable polymer stabilizers used in the examples were prepared as detailed below.

Total polymerization time was measured from the time at which the initiator was initially charged into the reaction vessel to the time when the polymerization was completed and heat was withdrawn from the vessel. DSC measurements were made using the DU PONT Model 9900 as previously described. The particle size of the non-meltable polymer stabilizer prior to melt compounding was measured on the ANALYZER as described previously. "PEG", where so used, is polyethylene glycol, a dispersant, having a molecular weight of about 8000.

Non-meltable polymer stabilizer A was prepared by polymerizing 298.5 grams of acrylamide, 1.5 grams of N,N'-methylenebisacrylamide, and 36 grams of PEG in 3000 ml. of 2-propanol. The polymerization reaction was started at about 72.5°C using an initial charge of 0.15 grams of 2,2'-azobis-(isobutyronitrile) initiator. Additional initiator was added, in increments of 0.03 grams, over the next approximately 200 minutes until the total amount of initiator added was 0.45 grams. Approximately 20 minutes after the initial charge of initiator was added, 91 ml. of a solution of 20 grams of PEG in 100 ml. of methanol solution were fed into the reaction vessel over a period of about 180 minutes. The polymerization temperature was maintained between about 72°C and 76°C. The total polymerization time was 240 minutes. The reaction mixture was cooled to 25°C, at which point 250 ml. of 2-propanol were added. The resulting polyacrylamide stabilizer dispersion was filtered in order to isolate the polymer stabilizer. The polymer stabilizer was rinsed with 1000 ml. of 2-propanol and dried in a 60°C vacuum oven.

DSC analysis showed that the polymer stabilizer had a small endotherm of 4.98 Joules/gram at 57.4°C, attributed to a polyethylene glycol. DSC analysis further showed a second endotherm of 2.6 Joules/gram at 189.6°C. The major melting point was 291.3°C, with an endotherm of 114.5 Joules/gram. The melt flow rate, in grams/10 min., was as follows: 5.16 at 6-7 minutes, 4.12 at 7-8 minutes, and 4.03 at 8-9 minutes. The stabilizer had a number average particle size of 1.4 microns.

The polymer stabilizer was washed with hot methanol to remove the polyethylene glycol dispersant and it was then redried. DSC analysis on the washed polymer stabilizer showed a small endotherm of 2.6 Joules/gram at 187.0°C. The major melting point was 295.0°C, with an endotherm of 209.5 Joules/gram. The washed polymer stabilizer showed no flow at 6-9 minutes. This illustrates that the presence of dispersant may adversely affect melt flow rate measurements. The number average particle size was 1.4 microns.

Non-meltable polymer stabilizer B was prepared by adding a solution of 52.50 grams of acrylamide and 0.53 grams 1,4-butanediol diacrylate in methanol (78.75 grams) to a solution of 7.00 grams tert-butylperoxypivylate and 26.25 grams PEG in methanol (802.00 grams). The resulting solution was heated to reflux (approximately 74°C). When the reaction began turning milky-white, two solutions, one consisting of 472.50 grams acrylamide and 4.72 grams 1,4-butanediol diacrylate in methanol (708.75 grams) and the other consisting of 26.25 grams PEG in methanol (172.50 grams), were simultaneously added to the refluxing reaction suspension over 2 hours. The resulting reaction suspension was allowed to reflux an additional 2.5 hours. The reaction suspension was filtered and the resulting white solid was washed with methanol (400 ml.) and dried at 55°C-60°C for 6 hours.

Non-meltable polymer stabilizer C was prepared by adding a solution of 14.3 kg acrylamide and 145.15 grams of 1,4-butanediol diacrylate to a refluxing solution of 1.44 kg PEG in 48.06 kg methanol (approximately 64°C) over about 2 hours. Throughout this addition, a total of 195.04 grams tert-butylperoxypivylate polymerization initiator was portionwise added. The resulting white solid was washed with methanol and dried in a vacuum oven ($6.75x10^4$ Pa) at 70°C for 1 day and at 100°C for 1 day.

Non-meltable polymer stabilizer D was prepared by gradually by adding a solution of 201.8 grams of acrylamide, 2.04 grams of N,N'-methylenebisacrylamide, and 20.4 grams of PEG in about 3800 ml. of methanol to a refluxing solution of 8.2 grams of tert-butyl peroxypivylate polymerization initiator and 10.2 grams of PEG in about 5000 ml. of methanol. The resultant reaction mixture was allowed to stir at reflux until the reaction was complete. The resulting reaction suspension was cooled to room temperature and filtered. The resulting white solid was washed in additional methanol and dried.

e. Co-stabilizer Compound Component

The co-stabilizer compounds, each of which were meltable, used in the examples were as follows:

"Nylon" was a 33/23/43 terpolymer of nylon 66, nylon 6/10 and nylon 6, respectively. It had a melting point, as determined by DSC analysis, of about 140°C. The nylon terpolymer was ground and passed through a 20 MESH screen prior to compounding. A 20 MESH screen has openings of 1.44 mm.

"EVOH-1" was an ethylene/vinyl alcohol copolymer containing 29 weight percent ethylene and 71 weight percent vinyl alcohol, and having an apparent melt viscosity at 210°C of 9500 P, which was purified by washing at 75°C for 16 hours using water (pH adjusted to 3 with $H_3PO_4$). The acidic water wash was drained from the washing vessel and the ethylene/vinyl alcohol copolymer was washed at 75°C for 4 hours with demineralized water and then dried. This co-stabilizer was prepared in accordance with the teachings of U.S.P. 4,766,168. It was ground and treated in the same manner as the Nylon co-stabilizer, above. It had a melting point, as determined by DSC analysis, of about 187°C.

"EVOH-2" was ethylene/vinyl alcohol copolymer containing 29 weight percent ethylene and 71 weight percent vinyl alcohol, and having an apparent melt viscosity at 210°C of 9500 P, which had been purified such that it contained less than 10 ppm ash.

"TPU" was a polyurethane elastomer comprised of 37 wt% adipic acid, 39 wt% 1,4-butanediol, and 24 wt% methylene bis(4-phenyl isocyanate) having an inherent viscosity of 1.33, as measured in accordance with ASTM D-2857 (solvent: dimethylformamide (DMF); temperature: 30°C; concentration: 0.01% co-stabilizer C in DMF). It had a melting point, as determined by DSC analysis, of about 150°C.

e. Other Additive Components

"PEG" was a polyethylene glycol having a molecular weight between about 7,000-9,000 and sold commercially under the trade name of Carbowax® 8000 (Union Carbide).

"PPPE" was a polyoxypropylenepolyoxyethylene block copolymer having an approximate molecular weight of 13000 (sold commercially as Pluronic® F98 by BASF Wyandotte Company).

"PTFE" was a polytetrafluoroethylene powder irradiated at the level of 7.5 mrad.

"Si oil" was a polydimethyl siloxane, trimethylsiloxy terminated silicone oil having a viscosity of 500 centistokes and a nominal molecular weight of 17,250.

II. EXAMPLES: CELLULOSE-STABILIZED POLYACETAL COMPOSITIONS IMPROVED WITH A CO-STABILIZER COMPOUND

Examples 1-17 below relate to cellulose-stabilized polyacetal compositions.

In Examples 1-17, along with Examples C1-C18, the thermal stability of the compositions was determined using a thermally evolved formaldehyde (TEF) test procedure. A weighed sample of the polyacetal composition was placed in a tube and the tube was fitted with a cap for introduction of nitrogen to the test sample for removal of any evolved gases from the apparatus while maintaining the sample in an oxygen-free environment. The sample was heated at either 250°C or 259°C in a silicone oil bath. The nitrogen and any evolved gases transported thereby were bubbled through 75 ml of a 40 g/l sodium sulfite in water solution. Any evolved formaldehyde reacts with the sodium sulfite to liberate sodium hydroxide. The sodium hydroxide was continuously neutralized with standard 0.1 N HCl. The results were obtained as a chart of ml of titer versus test time. The percent evolved formaldehyde was calculated by the formula

$$(V)\ (N)\ \frac{0.03 \times 100}{SW}$$

where

V is the volume of titer in milliliters
N is the normality of the titer, and
SW is the sample weight in grams.

The factor "0.03" is the milliequivalent weight of formaldehyde in g/milliequivalent.

Thermally evolved formaldehyde results are reported in the data tables below under columns headed "Wt % $CH_2O$ at x °C". The time period for which the sample was heated is also indicated in said data tables.

The antioxidants used in Examples 1-17 and C1-C18 were as follows:

(a) "antioxidant A" was triethyleneglycol bis(3-(3'-tert-butyl-4'-hydroxy-5'-methylphenyl)proprionate);
(b) "antioxidant B" was N,N'-hexamethylene bis(3,5-di-tert-butyl-4-hydroxyhydrocinnamide); and
(c) "antioxidant C" was tetrakis(methylene (3,5-di-tert-butyl-4-hydroxyhydrocinnamate))methane.

Examples 1-6 and C1-C8

The components of Examples 1-6 and C1-C8 are listed in Tables IA-IC, below. For each example, the components were mixed together and melt compounded on a 28 mm Werner and Pfleiderer twin screw extruder with barrel temperature settings of 150°C to 180°C, die temperature settings of 200°C, and a screw speed of 150 rpm. The temperature of the melt as it exited the die for the examples ranged from 221°C to 224°C. The melt compounded sample was tested by the TEF test, described above. The results are reported below in Tables IA-IC.

The results in Table IA, below, showed that when microcrystalline cellulose and at least one co-stabilizer compound were together incorporated into polyacetal, the thermal stability obtained on the resultant polyacetal composition (Example 1) was better than the thermal stability obtained for the same polyacetal composition with the co-stabilizer compound but without the microcrystalline cellulose (Example C1) and it was also better than the thermal stability obtained for the same polyacetal composition with microcrystalline cellulose but without the co-stabilizer compound (Example C2). Example 2 showed that improved stability is imparted to the polyacetal when there is incorporated therein microcrystalline cellulose and more than one co-stabilizer compound.

The results below in Table IB and Table IC again showed that best thermal stability results for polyacetal were obtained when the stabilizer incorporated into the polyacetal was a combination of microcrystalline cellulose and at least one co-stabilizer compound.

TABLE IA. EFFECT OF MICROCRYSTALLINE CELLULOSE AND A CO-STABILIZER ON POLYACETAL STABILITY

| Eg. No. | Wt % PAc | Wt % Microcrystalline Cellulose | Wt % Costabilizer Compound | Wt % AO | Wt % $CH_2O$ @ 259° C 15 min | 30 min |
|---|---|---|---|---|---|---|
| C1 | 99.7A | - | 0.2 EVOH-2 | 0.1B | 0.18 | 0.99 |
| C2 | 99.4A | 0.5 MC11 | - | 0.1B | 0.27 | 0.87 |
| 1 | 99.2A | 0.5 MC11 | 0.2 EVOH-2 | 0.1B | 0.09 | 0.42 |
| C3 | 99.6A | - | 0.2 EVOH-2<br>0.1 Nylon | 0.1B | 0.14 | 0.82 |
| 2 | 99.1A | 0.5 MC11 | 0.2 EVOH-2<br>0.1 Nylon | 0.1B | 0.07 | 0.39 |

PAc = polyacetal
AO = antioxidant

TABLE IB. EFFECT OF MICROCRYSTALLINE CELLULOSE AND A "NYLON" CO-STABILIZER COMPOUND ON POLYACETAL STABILITY

| Eg. No. | Wt % PAc | Wt % Microcrystalline Cellulose | Wt % Costabilizer Compound | Wt % AO | Wt % $CH_2O$ @ 259º C 15 min | Wt % $CH_2O$ @ 259º C 30 min |
|---|---|---|---|---|---|---|
| C4 | 99.4A | 0.5 MC20 | - | 0.1A | 0.13 | 0.53 |
| C5 | 98.9A | - | 1.0 Nylon | 0.1A | 0.05 | 0.41 |
| 3 | 99.4A | 0.25 MC20 | 0.25 Nylon | 0.1A | 0.04 | 0.26 |
| | | | | | Wt % $CH_2O$ @ 250º C 15 min | Wt % $CH_2O$ @ 250º C 30 min |
| C6 | 99.4A | 0.5 MC20 | - | 0.1B | 0.13 | 0.52 |
| 4 | 99.4A | 0.4 MC20 | 0.1 Nylon | 0.1B | 0.04 | 0.28 |

PAc = polyacetal
AO = antioxidant

TABLE IC. EFFECT OF MICROCRYSTALLINE CELLULOSE AND AN "EVOH" CO-STABILIZER COMPOUND ON POLYACETAL STABILITY

| Eg. No. | Wt % PAc | Wt % Microcrystalline Cellulose | Wt % Costabilizer Compound | Wt % AO | Wt % $CH_2O$ @ 259º C 15 min | 30 min |
|---|---|---|---|---|---|---|
| C7 | 99.4A | 0.5 MC20 | - | 0.1B | 0.20 | 0.66 |
| C8 | 98.9A | - | 1.0 EVOH-2 | 0.1B | 0.09 | 0.69 |
| 5 | 99.4A | 0.25 MC20 | 0.25 EVOH-2 | 0.1B | 0.05 | 0.33 |
| C4 | 99.4A | 0.5 MC20 | - | 0.1A | 0.13 | 0.53 |
| 6 | 99.4A | 0.25 MC20 | 0.25 EVOH-2 | 0.1A | 0.04 | 0.26 |

PAc = polyacetal
C4 is the same composition as reported in TABLE IB
AO = antioxidant

Examples 7-11 and C9-C11

The components of Examples 7-11 and C9-C11 are listed in Table II, below. The compositions of the examples further each contained 0.1 weight percent antioxidant B. The components were mixed together, melt compounded, and extruded on a 2.5 inch Sterling single screw extruder with barrel temperature settings ranging from 150°C-200°C and with a screw speed of 50 rpm. The temperature of the melt as it exited the die ranged from 202°C to 207°C. Each sample was subjected to the TEF test, described above.

The results for Examples 7-11 and C9-C11 are reported in Table II, below. The results showed that microcrystalline cellulose in combination with two co-stabilizer compounds improved the thermal stability of polyacetal, at short test times, to a greater extent than did a conventional polyamide stabilizer alone (Example C9). The results further showed that as the average particle size of the microcrystalline cellulose decreased, the stability imparted to the polyacetal increased.

TABLE II.

| POLYACETAL WITH MICROCRYSTALLINE CELLULOSE OF VARYING PARTICLE SIZE | | | | | |
|---|---|---|---|---|---|
| Eg. No. | Wt % PAc | Wt% Microcrystalline Cellulose | Wt% CoStab | Wt% $CH_2O$ @ 259°C | |
| | | | | 15 min | 30 min |
| C9 | 98.9B | - | 1.00B | 0.13 | 0.59 |
| C10 | 98.9B | - | 0.75B<br>0.25A | 0.05 | 0.34 |
| C11 | 99.4B | - | 0.35B<br>0.15A | 0.07 | 0.35 |
| 7 | 98.9B | 0.5 MC3 | 0.35B<br>0.15A | 0.03 | 0.26 |
| 8 | 98.9B | 0.5 MC6 | 0.35B<br>0.15A | 0.02 | 0.21 |
| 9 | 98.9B | 0.5 MC20 | 0.35B<br>0.15A | 0.03 | 0.24 |
| 10 | 98.9B | 0.5 MC50 | 0.35B<br>0.15A | 0.06 | 0.52 |
| 11 | 98.9B | 0.5 MC100 | 0.35B<br>0.15A | 0.08 | 0.78 |

PAc = polyacetal
CoStab = co-stabilizer compound
Costabilizer B = EVOH-2
Costabilizer A = nylon

Examples 12-13 and C12-C15

The components of Examples 12-13 and C12-C15 are listed in Table III, below. For each example, the components were mixed together, melt compounded, and extruded under the same conditions as were Examples 1-6 above. The melt compounded sample was tested by the TEF test, described above. The results are reported in Table III, below. Examples C14 and C15 illustrate the type of results that may be obtained when the fibrous cellulose used has a pH of less than 5.5

TABLE III. EFFECT OF FIBROUS CELLULOSE AND A CO-STABILIZER COMPOUND ON POLYACETAL STABILITY

| Eg. No. | Wt % PAc | Wt % Fibrous Cellulose | Wt % Costabilizer Compound | Wt % AO | Wt % $CH_2O$ @ 259° C 15 min | Wt % $CH_2O$ @ 259° C 30 min |
|---|---|---|---|---|---|---|
| C12 | 99.1B | - | 0.8 EVOH-2 | 0.1B | 0.06 | 0.47 |
| C13 | 99.1B | - | 0.5 EVOH-2<br>0.3 Nylon | 0.1B | 0.08 | 0.48 |
| 12 | 94.1B | 5.0 FC1 | 0.8 EVOH-2 | 0.1B | 0.28 | 0.66 |
| 13 | 94.1B | 5.0 FC1 | 0.3 Nylon | 0.1B | 0.13 | 0.34 |
| C14 | 99.2B | 5.0 FC2 | 0.5 EVOH-2<br>0.3 Nylon | 0.1B | 0.60 | 3.41 |
| C15 | 79.3B | 20.2 FC2 | 0.4 EVOH-2<br>0.2 Nylon | 0.08B | 1.31 | 5.89 |

PAc = polyacetal
AO = antioxidant

Examples 14-17 and C16-C18

The components of Examples 14-17 and C16-C18 are listed in Table IV, below. Each composition contains an additive in addition to the stabilizers and the antioxidants. For each example, the components were melt compounded on a 53 mm twin screw extruder with a barrel temperature setting of about 210°C. The temperature of the melt as it exited the die ranged from about 210°C to 235°C. Each sample was subjected to the TEF test, described above.

Thermal stability results showed the best stability at longer test time was achieved when the composition tested contained microcrystalline cellulose and a co-stabilizer compound.

TABLE IV. POLYACETAL COMPOSITIONS CONTAINING MICROCRYSTALLINE CELLULOSE, CO-STABILIZERS AND OTHER ADDITIVES

| Eg. No. | Wt. % PAC | Wt. % Microcrystalline Cellulose | Wt. % Costabilizer Compound | Wt. % AO | Wt. % Additive | Wt. % $CH_2O$ @ 250°C 15 min | 30 min | 60 min |
|---|---|---|---|---|---|---|---|---|
| C16 | 99.35A | - | 0.25 nylon<br>0.75 EVOH-2 | 0.075B<br>0.075A | 1.50 PTFE powder | 0.24 | 0.93 | 2.13 |
| 14 | 97.35A | 0.50 MC6 | 0.15 nylon<br>0.35 EVOH-2 | 0.075B<br>0.075A | 1.50 PTFE powder | 0.18 | 0.52 | 1.14 |
| C17 | 97.35A | - | 0.25 nylon<br>0.75 EVOH-2 | 0.075B<br>0.075C | 1.50 PTFE powder | 0.21 | 0.78 | 1.84 |
| 15 | 97.35A | 0.50 MC6 | 0.15 nylon<br>0.35 EVOH-2 | 0.075B<br>0.075C | 1.50 PTFE powder | 0.20 | 0.60 | 1.22 |
| C18 | 78.85A | - | 0.25 nylon<br>0.75 EVOH-2 | 0.075B<br>0.075A | 20.0 PTFE fiber | 0.23 | 0.96 | 2.28 |
| 16 | 78.85A | 0.50 MC6 | 0.15 nylon<br>0.35 EVOH-2 | 0.075B<br>0.075A | 20.0 PTFE fiber | 0.29 | 0.85 | 2.16 |
| 17 | 77.85A | 0.50 MC6 | 0.15 nylon<br>0.35 EVOH-2 | 0.075B<br>0.075A | 20.0 PTFE fiber<br>1.0 Si oil | 0.14 | 0.50 | 1.32 |

AO = antioxidant

III. EXAMPLES: NON-MELTABLE POLYMER STABILIZED POLYACETAL COMPOSITIONS IMPROVED WITH AN AMIDE-CONTAINING PHENOLIC ANTIOXIDANT EXAMPLES

Examples 18-28 and C19-C27 relate to non-meltable polymer stabilized polyacetal compositions improved with at least one amide-containing phenolic antioxidant.

The amide-containing phenolic antioxidant used in Examples 18-28 and C19-C27 was as follows:

"AmConI" was N,N'-hexamethylene bis(3,5-di-tert-butyl-4-hydroxyhydrocinnamide); this was the same as antioxidant B, above.

The non-amide-containing antioxidants used in Examples 18-28 and C19-C27 were as follows:

(a) "antioxidant A" was triethylene glycol bis(3-(3'-tert-butyl-4'-hydroxy-5'-methylphenyl) propionate) ;
(b) "antioxidant E" was 1,6-hexanediol bis(3,5-di-tert-butyl-4-hydroxyhydrocinnamate);
(c) "antioxidant C" was tetrakis(methylene (3,5-di-tert-butyl-4-hydroxyhydrocinnamate))methane;
(d) "antioxidant G" was 2,2'-methylene-bis-(4-methyl-6-tert-butyl phenol);
(e) "antioxidant H" was 4,4'-butylidene-bis-(6-tert-butyl-3-methyl phenol);
(f) "antioxidant I" was bis(3,5-di-tert-butyl-4-hydroxyhydrocinnamyl)-1,2-hydrazide;
(g) "antioxidant J" was tris(methylene(3,5-di-tert-butyl-4-hydroxyphenyl)-1,3,5-cyanuric acid; and
(h) "antioxidant K" was l-octadecanol(3,5-di-tert-butyl-4-hydroxyhydrocinnamate).

In Examples 18-28 and C19-C27, data were obtained on polyacetal compositions that had been compounded on an extruder and then molded into 1/8-inch thick tensile bars. Exact extrusion conditions are detailed below for each set of examples. The tensile bars of each composition were preweighed and were placed in a circulating air oven at Iso°C for the times noted in each Table below. Oven location effects were averaged by distributing bars of a sample throughout the oven or by continuously rotating the bars on a carousel. At the end of the specified time period, the samples were removed from the oven, weighed, and tested for tensile strength and elongation according to ASTM Method D-638 (0.2 in/min. crosshead speed). The percent weight loss was calculated from the following formula:

$$[1-(\text{weight after aging})/\text{weight before aging})] \times 100$$

Examples 18 and C19-C24

The compositions listed in Table VA, below, were compounded on a 2-inch single screw extruder equipped with a barrier screw and a valve die (190°C barrel settings, 50-80 rpm screw speed, 50 psi pressure). The compounded resins were injection molded into 1/8-inch thick tensile bars on a Van Dorn Model 150 RS3 6 oz. reciprocating screw injection molding machine equipped with a two-cavity mold (45/20 injection/hold cycle, 1000 psig pressure, 200°C barrel temperature settings, 90°C mold temperature setting). The tensile bars of each composition were placed in a circulating air oven at 150°C for the times notes in Table VB, below. The data reported in Table VB, below, were averages of measurements performed on three tensile bars.

TABLE VA. POLYACETAL COMPOSITIONS CONTAINING A NON-MELTABLE POLYMER STABILIZER AND AN AMIDE-CONTAINING PHENOLIC ANTIOXIDANT

| Example No. | Wt.% Polyacetal A | Wt. % Non-Meltable Polymer Stabilizer B | Antioxidant | Wt. % Antioxidant |
|---|---|---|---|---|
| 18 | 99.40 | 0.50 | AmCon1 | 0.10 |
| C19 | 99.40 | 0.50 | A | 0.10 |
| C20 | 99.10 | 0.50 | A | 0.40 |
| C21 | 99.40 | 0.50 | E | 0.10 |
| C22 | 99.40 | 0.50 | C | 0.10 |
| C23 | 99.40 | 0.50 | G | 0.10 |
| C24 | 99.40 | 0.50 | H | 0.10 |

TABLE VB. EVALUATION OF POLYACETAL COMPOSITIONS IN TABLE VA

| Example No. | Initial 0 days TS/E (* /%) | Testing at 150 Degrees C 2 days TS/E/WL (* /%) | 5 days TS/E/WL (* /%/%) | 9 days TS/E/WL (* /%/%) | 16 days TS/E/WL (* /%/%) |
|---|---|---|---|---|---|
| 18 | 694/27 | 619/9/0.51 | 519/9/0.62 | 591/9/1.27 | 520/6/4.16 |
| C19 | 686/14 | 632/11/0/48 | 551/6/1.03 | 518/5/5.79 | 406/4/15.63 |
| C20 | 680/20 | 601/8/0.52 | 545/6/1.53 | 481/4/7.16 | 316/2/22.72 |
| C21 | 690/23 | 638/11/0.41 | 597/9/0.85 | 562/8/4.68 | 472/5/12.32 |
| C22 | 690/27 | 612/8/0.51 | 569/7/1.37 | 535/6/5.29 | 371/3/13.83 |
| C23 | 693/34 | 603/8/0.57 | 507/4/1.00 | 479/4/4.01 | Disintegrated |
| C24 | 691/23 | 581/7/0.71 | 517/5/2.26 | 372/2/9.13 | Disintegrated |

TS = tensile strength
E = elongation
WL = weight loss
* = unit for tensile strength is $kg/cm^2$

Comparison of Example 18 with C19-C24 demonstrates the present invention. The polyacetal stabilized with a non-meltable polymer stabilizer had significantly improved long term stability when an amide-containing phenolic antioxidant, as opposed to a non-amide-containing phenolic antioxidant, was added to the polyacetal composition containing a non-meltable polymer stabilizer.

Comparison of Example C21 with Example 18 highlights the significance of the amide functionality in achieving significantly improved long term stability. The only difference between the two compositions was that the composition of Example 18 had an amide-containing antioxidant and the composition of C21 had a non-amide-containing antioxidant. More specifically, antioxidant E of C21 was exactly the same as the amide-containing antioxidant (AmCon1) of Example 18 except that it contained ester functionaltiy in place of amide functionality. The structure of antioxidant E was as follows:

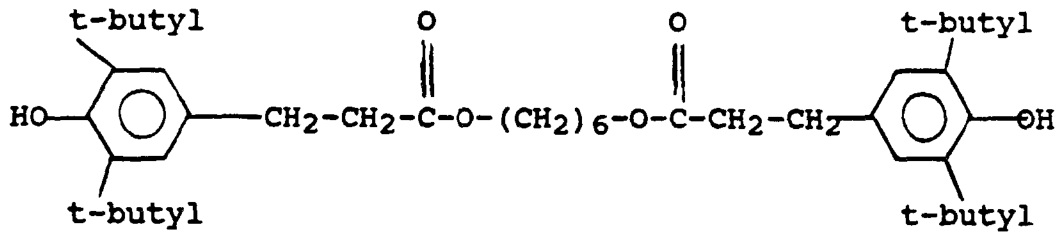

The structure of the amide-containing phenolic antioxidant AmCon1 was as follows:

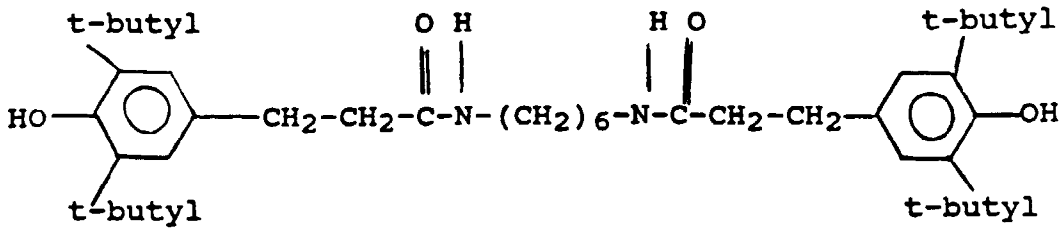

The weight loss, after 16 days, for the composition of Example C21, which contained the non-amide-containing phenolic antioxidant E, was about three times greater than the weight loss experienced by the composition of Example 18, which contained the amide-containing compound.

Examples 19-20 and C25

The compositions listed in Table VIA, below, were melt compounded, extruded, and molded into tensile bars as described for Examples 18 and C19-C24. The tensile bars were treated the same as in Example 18 and Examples C1-C6. Results reported in Table VIB, below, are based on an average of the values obtained from three tensile bars.

TABLE VIA. POLYACETAL COMPOSITIONS CONTAINING A NON-MELTABLE POLYMER STABILIZER AND AN AMIDE-CONTAINING PHENOLIC ANTIOXIDANT

| Example No. | Wt. % Polyacetal A | Wt.% Non-Meltable Polymer Stabilizer B:A (30:70) | Anti-oxidant | Wt. % Antioxidant |
|---|---|---|---|---|
| 19 | 99.40 | 0.50 | AmCon1 | 0.10 |
| 20 | 99.10 | 0.50 | AmCon1 | 0.40 |
| C25 | 99.40 | 0.50 | A | 0.10 |

**TABLE VIB. EVALUATION OF POLYACETAL COMPOSITIONS IN TABLE VIA**

| Example No. | Initial 0 Days TS/E ( * /%) | Testing at 150 Degrees C 2 Days TS/E/WL ( * /%/%) | 5 Days TS/E/WL ( * /%/%) | 9 Days TS/E/WL ( * /%/%) | 16 Days TS/E/WL ( * /%/%) |
|---|---|---|---|---|---|
| 19 | 679/26 | 657/15/0.26 | 555/9/0.63 | 576/10/0.79 | 522/3/3.64 |
| 20 | 677/25 | 597/8/0.49 | 568/8/0.45 | 552/9/1.21 | 517/5/3.31 |
| C25 | 680/25 | 619/12/0.35 | 595/11/1.05 | 542/9/4.30 | 420/2/12.38 |

TS = tensile strength
E = elongation
WL = weight loss
* = unit for tensile strength is $kg/cm^2$

The results again showed that significantly better long term stability was achieved when an amide-containing phenolic antioxidant was present in the polyacetal composition containing at least one non-meltable polymer stabilizer than when a non-amide-containing phenolic antioxidant was present. The weight loss after 16 days for a composition containing the amide-containing phenolic antioxidant was approximately four times less than that of the same composition containing a non-amide-containing phenolic antioxidant.

Examples 21-28 and C26-C27

The compositions listed in Table VIIA, below, were compounded on a 2-inch single screw extruder. The nominal extruder barrel temperature was approximately 210°C. The extruded resins were injection molded into 1/8-inch thick tensile bars with an extruder temperature of approximately 207°C and a mold temperature of approximately 88°C. The tensile bars of each composition were placed in a circulating air oven at 150°C for the times noted in Table VIIB, below. The data, reported in Table VIIB, below, were the average of measurements performed on five tensile bars.

TABLE VIIA. POLYACETAL COMPOSITIONS CONTAINING A NON-MELTABLE POLYMER STABILIZER AND AN AMIDE-CONTAINING PHENOLIC ANTIOXIDANT

| Example No. | Wt. % Polyacetal | Wt. % Non-meltable Polymer Stabilizer C | Antioxidant | Wt. % Anti-oxidant | Wt. % Additive |
|---|---|---|---|---|---|
| 21 | 99.35 | 0.50 | AmCon1:A | 0.05:0.10 | - |
| 22 | 99.25 | 0.50 | AmCon1:A:J | 0.05:0.10:0.10 | - |
| 23 | 99.20 | 0.50 | AmCon1:A | 0.10:0.20 | - |
| 24 | 98.85 | 0.50 | AmCon1:A | 0.05:0.10 | 0.50 PEG |
| 25 | 98.85 | 0.50 | AmCon1:A | 0.05:0.10 | 0.50 PPPE |
| 26 | 99.35 | 0.50 | AmCon1:K | 0.05:0.10 | - |
| 27 | 99.35 | 0.50 | AmCon1:A | 0.10:0.05 | - |
| 28 | 99.35 | 0.50 | AmCon1:C | 0.05:0.10 | - |
| C26 | 99.30 | 0.50 | A | 0:20 | - |
| C27 | 99.35 | 0.50 | I:A | 0.05:0.10 | - |

**TABLE VIIB. EVALUATION OF POLYACETAL COMPOSITIONS IN TABLE VIIA**

| Example No. | Initial 0 Days TS/E (* /%) | Testing at 150 Degrees C 10 Days TS/E/WL (* /%/%) | 15 Days TS/E/WL (* /%/%) | 16 Days TS/E/WL (* /%/%) |
|---|---|---|---|---|
| 21 | 671/40 | 495/4/1.77 | 501/5/4.62 | - |
| 22 | 683/21 | 668/9/0.27 | - | 582/4/0.83 |
| 23 | 678/23 | 668/10/0.33 | - | 578/5/0.67 |
| 24 | 672/27 | 638/8/0.31 | - | 566/5/0.91 |
| 25 | 670/23 | 599/6/0.32 | - | 564/6/1.07 |
| 26 | 681/17 | 544/5/0.56 | - | 554/6/3.19 |
| 27 | 685/21 | 625/8/0.68 | - | 554/5/1.35 |
| 28 | 673/36 | 644/8/0.32 | - | 602/5/0.58 |
| C26 | 671/37 | 488/4/5.27 | 382/3/14.21 | - |
| C27 | 680/21 | 403/4/11.26 | 305/3/20.08 | - |

TS = tensile strength
E = elongation
WL = weight loss
* = $kg/cm^2$

Comparison of Examples 21-28 with Examples C26-C27 further demonstrates the present invention. A comparison of Example C26 with Example 21 shows that when an amide-containing phenolic antioxidant was added along with a non-amide-containing phenolic antioxidant to a polyacetal composition containing a non-meltable polymer stabilizer, the retention of physical properties over time was significantly better than that of the same polyacetal composition with

a non-amide- containing phenolic antioxidant alone. Example C27 shows the results that were achieved when the antioxidant had a nitrogen-containing group but where the nitrogen-containing group was of a hydrazide functionality and not of an amide functionality. These results illustrate the importance of having amide functionality in the antioxidant. Examples 24-25 demonstrate an additional feature of the present invention; namely, that processing aids may be incorporated into the stabilized polyacetal composition without loss of properties. Finally, Examples 21-28 show that an antioxidant mixture, which contained at least one amide-containing phenolic antioxidant, imparted better retention of properties to the non-meltable polymer stabilized polyacetal composition than did either a non-amide-containing phenolic antioxidant alone or a mixture of more than one non-amide-containing phenolic antioxidant.

## IV. EXAMPLES: NON-MELTABLE POLYMER STABILIZED POLYACETAL COMPOSITIONS IMPROVED WITH A CO-STABILIZER COMPOUND AND A PRIMARY ANTIOXIDANT

Examples 29-38 and C28-C34 relate to non-meltable polymer stabilized polyacetal compositions improved with a meltable co-stabilizer compound and at least one primary antioxidant.

The primary antioxidants used in the examples below were as follows:

(a) "antioxidant A" was triethylene glycol bis(3-(3'-tert-butyl-4'-hydroxy-5'-methylphenyl) proprionate);

(b) "antioxidant B" was N,N'-hexamethylene bis(3,5-di-tert-butyl-4-hydroxy-hydrocinnamide); this is the same as AmCon1, above; and

(c) "antioxidant C" was tetrakis(methylene (3,5-di-tert-butyl-4-hydroxyhydrocinnamate)) methane.

In Examples 29-38 and C28-C34, data were obtained on polyacetal compositions that had been compounded on an extruder and then molded into 1/8-inch thick tensile bars. Exact extrusion conditions are detailed below for each set of examples. The tensile bars of each composition were preweighed and were placed in a circulating air oven at 150°C for the times notes in each Table below. Oven location effects were averaged by distributing bars of a sample throughout the oven or by continuously rotating the bars on a carousel. At the end of the specified time period, the samples were removed from the oven, weighed, and tested for tensile strength and elongation according to ASTM Method D-638 (0.2 in/min. crosshead speed). The percent weight loss was calculated from the following formula:

$$[1-(\text{weight after aging})/\text{weight before aging})] \times 100.$$

### Examples 29-32 and C28-C31

The compositions listed in Table VIIIA, below, were compounded on a 2-inch single screw extruder equipped with a barrier screw and a valve die (190'C barrel temperature settings, 50-80 rpm screw speed, 500 psi pressure). The compounded resins were injection molded into 1/8-inch tensile bars on a Van Dorn Model 150 RS3 6 oz. reciprocating screw injection molding machine equipped with a two-cavity mold (45/20 injection/hold cycle, 1000 psig pressure, 200'C barrel temperature settings, 90'C mold temperature setting).

The tensile bars of each composition were placed in a circulating air oven at 150'C for the times noted in Table VIIIB, below. The reported data were averages of measurements performed on three tensile bars.

TABLE VIIIA. POLYACETAL COMPOSITIONS CONTAINING A NON-MELTABLE POLYMER STABILIZER WITH A MELTABLE CO-STABILIZER COMPOUND AND A PRIMARY ANTIOXIDANT

| Eg. No | Wt. % PolyacetalA | Non-Meltable Polymer Stabilizer | Wt. % Non-Meltable Polymer Stabilizer | Wt. % Co-Stabilizer | Wt. % Anti-oxidant |
|---|---|---|---|---|---|
| C28 | 99.40 | 70A:30B | 0.50 | - | 0.10A |
| 29 | 99.20 | 70A:30B | 0.50 | 0.20 Nylon | 0.10A |
| 30 | 98.40 | 70A:30B | 0.50 | 1.00 TPU | 0.10A |
| C29 | 99.40 | 70A:30B | 0.50 | - | 0.10B |
| C30 | 99.10 | 70A:30B | 0.50 | - | 0.40B |
| 31 | 99.20 | 70A:30B | 0.50 | 0.20 Nylon | 0.10B |
| 32 | 98.90 | 70A:30B | 0.50 | 0.50EVOH-1 | 0.10B |
| C31 | 99.13 | - | - | 0.80EVOH-1 | 0.07B |

**TABLE VIIIB. EVALUATION OF POLYACETAL COMPOSITIONS IN TABLE VIIIB**

| Eg. No. | Initial 0 days TS/E (* /%) | Testing at 150 Degrees C 2 days TS/E/WL (* /%/%) | 5 days TS/E/WL (* /%/%) | 9 days TS/E/WL (* /%/%) | 16 days TS/E/WL (* /%/%) |
|---|---|---|---|---|---|
| C28 | 680/25 | 624/12/0.35 | 595/11/1.05 | 542/9/4.70 | 420/2/12.38 |
| 29 | 680/22 | 697/16/0.26 | 648/15/0.48 | 620/13/1.57 | 594/8/4.72 |
| 30 | 669/26 | 665/17/0.22 | 641/15/0.41 | 575/12/1.30 | 521/5/4.52 |
| C29 | 679/26 | 657/15/0.26 | 555/9/0.63 | 575/10/0.79 | 522/3/3.64 |
| C30 | 677/25 | 597/8/0.49 | 568/8/0.45 | 552/9/1.21 | 517/5/3.31 |
| 31 | 680/27 | 687/20/0.33 | 652/14/0.47 | 607/12/1.01 | 572/7/3.72 |
| 32 | 689/23 | 692/17/0.33 | 670/14/0.51 | 636/12/0.97 | 604/7/3.20 |
| C31 | 699/32 | 686/15/0.40 | 624/8/0.74 | 613/9/1.52 | 491/4/4.44 |

TS = tensile strength
E = elongation
WL = weight loss
* = unit for tensile strength is $kg/cm^2$

The examples show that the overall retention of properties, and thereby the long term stability, of the polyacetal compositions containing a minor amount of a meltable co-stabilizer compound and a primary antioxidant was improved over the same compositions lacking the meltable co-stabilizer compound.

Examples 33-35 and C32-C34

The compositions listed in Table IXA, below, were compounded on a 2-inch single screw extruder. The barrel temperature was approximately 210°C. The compounded resins were injection molded into 1/8-inch thick tensile bars with a barrel temperature of approximately 207°C and a mold temperature of approximately 88°C.

The tensile bars of each composition were placed in a circulating air oven at 150°C for the times noted in Table IXB, below. The reported data were the averages of measurements performed on five tensile bars.

TABLE IXA. POLYACETAL COMPOSITIONS CONTAINING A NON-MELTABLE POLYMER STABILIZER WITH A MELTABLE CO-STABILIZER COMPOUND AND A PRIMARY ANTIOXIDANT

| Eg. No. | Wt. % Polyacetal | Non-Meltable Polymer Stabilizer | Wt. % Non-Meltable Polymer Stabilizer | Wt. % Co-Stabilizer | Wt. % Anti-oxidant |
|---|---|---|---|---|---|
| C32 | 99.30 | C | 0.50 | - | 0.20A |
| 33 | 98.95 | C | 0.50 | 0.10 Nylon<br>0.15EVOH-1 | 0.10C<br>0.20A |
| C33 | 99.35 | C | 0.50 | - | 0.05B<br>0.10A |
| 34 | 99.10 | C | 0.50 | 0.10Nylon<br>0.15EVOH-1 | 0.05B<br>0.10A |
| C34* | 98.85 | C | 0.50 | - | 0.05B<br>0.10A |
| 35* | 98.60 | C | 0.50 | 0.10Nylon<br>0.10EVOH-1 | 0.05B<br>0.10A |

*composition also contained 0.50 weight percent PEG

**TABLE IXB. EVALUATION OF POLYACETAL COMPOSITIONS IN TABLE IXA**

| | Initial 0 days TS/E (* /%) | Testing at 150 Degrees C 10 days TS/E/WL (* /%/%) | 14 days TS/E/WL (* /%/%) | 16 days TS/E/WL (* /%/%) |
|---|---|---|---|---|
| C32 | 671/37 | 488/4/5.27 | 382/3/14.21 | - |
| 33 | 683/32 | 728/20/0.26 | - | 737/16/0.24 |
| C33 | 671/40 | 495/4/1.77 | 501/5/4.62 | - |
| 34 | 688/30 | 739/20/0.30 | - | 729/17/0.29 |
| C34 | 673/27 | 638/8/0.31 | - | 566/5/0.91 |
| 35 | 673/37 | 744/24/0.27 | - | 716/14/0.40 |

TS = tensile strength
E = elongation
WL = weight loss
* = unit of tensile strength is $kg/cm^2$

The examples show that the overall long term retention of properties was greater for polyacetal compositions containing a mixed meltable co-stabilizer system and a mixed primary antioxidant system than for those corresponding polyacetal compositions lacking the meltable co-stabilizer component.

Examples 36-38

The compositions of Examples 36-38 contain additives such as PTFE and Si oil.

The compositions listed in Table XA, below, were compounded on a 53 mm twin screw extruder. The barrel temperature was approximately 210°C. The temperature of the melt as it exited the extruder ranged from about 210°C to 235°C. The compounded resins were injection molded into 1/8 inch thick tensile bars on a molding machine (barrel temperature setting 207°C, mold temperature setting 88°C).

The tensile bars of each composition were placed in a circulating air oven at 130°C for the times noted in Table XB, below. The reported data were the average of measurements performed on five tensile bars.

TABLE XA. POLYACETAL COMPOSITIONS CONTAINING A NON-MELTABLE POLYMER STABILIZER WITH A MELTABLE CO-STABILIZER COMPOUND AND A PRIMARY ANTIOXIDANT

| Eg. No. | Wt. % Polyacetal | Non-Meltable Polymer Stabilizer (%) | Meltable Co-stabilizer (%) | Wt. % Antioxidant | Additive (%) |
|---|---|---|---|---|---|
| 36 | 96.35 | 0.50 D | 0.15 Nylon<br>0.35 EVOH-1 | 0.075 B<br>0.075 A | 1.50 PTFE<br>1.0 Si oil |
| 37 | 97.35 | 0.50 D | 0.15 Nylon<br>0.35 EVOH-1 | 0.075 B<br>0.075 A | 1.50 PTFE |
| 38 | 97.35 | 0.50 D | 0.15 Nylon<br>0.35 EVOH-1 | 0.075 B<br>0.075 C | 1.50 PTFE |

TABLE XB. EVALUATION OF POLYACETAL COMPOSITIONS IN TABLE XB

| | Initial | Testing at 130 Degrees C | |
|---|---|---|---|
| Eg. No. | 0 days TS/E (psi/%) | 10 Days TS/E/WL (psi/%/%) | 40 Days TS/E/WL (psi/%/%) |
| 36 | 9180/27 | 9660/14/0.28 | 8510/5.1/0.51 |
| 37 | 9690/20 | 10290/15/0.32 | 10260/12/0.74 |
| 38 | 9620/23 | 10210/16/0.40 | 9730/10/0.88 |

TS = tensile strength
E = elongation
WL = weight loss

## Claims

1. A thermoplastic polyacetal composition consisting essentially of

(a) 0.05 to 5 weight percent of a stabilizer selected from the group consisting of microcrystalline cellulose and fibrous cellulose,
(b) 0.05 to 4 weight percent of at least one co-stabilizer compound selected from the group consisting of polyamides, hydroxy-containing polymers, hydroxy-containing oligomers, hydroxycontaining polymers that also contain at least one other functional group that is a stronger Lewis base than the hydroxy groups, and hydroxy-containing oligomers that also contain at least one other functional group that is a stronger Lewis base than the hydroxy groups, wherein the hydroxy-containing polymers or oligomers have a melting point or glass transition temperature less than the temperature at which the polyacetal is melt-processed or a melt flow rate measured according to ASTM-D 1238 greater than the one-tenth that of the polyacetal at the temperature at which the polyacetal is melt-processed, and
(c) 91.0 to 99.9 weight percent of at least one polyacetal polymer,

provided that the component (a) stabilizer has an average particle size of 100 microns or less, provided further that the atoms in the backbone of the component (b) hydroxy-containing polymers or oligomers to which the hydroxy groups are attached, directly or indirectly, are separated by not more than twenty chain atoms and that the component (b) is substantially free of acidic materials, and further provided that the above-stated percentages are based on the total amount of components (a), (b), and (c) only.

**2.** The composition of Claim 1 wherein an aqueous suspension of 1 to 10 weight % of component (a) cellulose stabilizer has a pH of 5.5-8.

**3.** The composition of Claim 1 wherein the component (c) polyacetal polymer is a homopolymer, an aqueous suspension of 1 to 10 weight % of the component (a) cellulose stabilizer has a pH of 5.5-7, and the component (b) co-stabilizer compound is substantially free of acidic materials and basic materials.

**4.** The composition of Claim 1 wherein the component (a) cellulose-stabilizer is microcrystalline cellulose having an average particle size of 50 microns or less.

**5.** The composition of Claim 1 wherein the component (a) cellulose stabilizer is microcrystalline cellulose having an average particle size of 25 microns or less.

**6.** The composition of Claim 1 wherein the component (a) cellulose stabilizer is microcrystalline cellulose having an average particle size of 10 microns or less.

**7.** The composition of Claim 1 wherein the component (a) cellulose stabilizer is fibrous cellulose.

**8.** The composition of Claim 7 wherein the fibrous cellulose is derived from cellulose-producing bacteria.

**9.** The composition of Claim 1 wherein the component (b) co-stabilizer compound is a polyamide.

**10.** The composition of Claim 9 wherein the polyamide is selected from the group consisting of (a) 33/23/43 terpolymers of nylon 66, nylon 6/10, and nylon 6, respectively, (b) nylon 6/6 dispersed in a carrier resin, and (c) 85/15 copolymers of nylon 66/nylon 6, respectively, dispersed in a carrier resin.

**11.** The composition of Claim 1 wherein the component (b) co-stabilizer compound is a hydroxy-containing polymer or a hydroxy-containing oligomer.

**12.** The composition of Claim 11 wherein the hydroxy-containing polymer is poly(ethylene vinyl alcohol).

**13.** A thermoplastic polyacetal composition consisting essentially of

(a) 0.05-3.0 weight percent of at least one polymer stabilizer which does not melt at the processing temperature of the polyacetal polymer or which has a melt flow rate ASTM-D 1238 of less than one-tenth of the melt flow rate of the polyacetal polymer and which is selected from the group consisting of polymers containing formaldehyde reactive hydroxyl groups, polymers containing formaldehyde reactive nitrogen groups, and polymers containing both formaldehyde reactive hydroxyl groups and formaldehyde reactive nitrogen groups, provided that the atoms in the backbone of the polymer to which the formaldehyde reactive groups are attached, directly or indirectly, are separated from each other, on average, by not more than twenty chain atoms, and further provided that the amount of the formaldehyde reactive nitrogen groups attached, directly or indirectly, to the atoms which are in the backbone of the polymer is at least three times as great as the amount of formaldehyde reactive nitrogen groups present in the backbone of the polymer, the formaldehyde reactive nitrogen groups being comprised of a nitrogen atom having one or two hydrogen atoms attached thereto,
(b) 0.02-1.00 weight percent of at least one amide-containing phenolic antioxidant, and
(c) 96-99.93 weight percent of at least one polyacetal polymer,

provided that the above-stated percentages are based on the total amount of components (a), (b), and (c) only and further provided that the polymer of component (a) has a number average particle size in the composition of less than 10 microns.

**14.** The composition of Claim 13 further comprised of 0.05-0.50 weight percent of at least one non-amide-containing antioxidant, with said weight percent being based upon the weight of the polymer stabilizer, the polyacetal polymer, the non-amide-containing antioxidant, and the amide-containing antioxidant.

**15.** The composition of Claims 13 or 14 wherein the amide-containing phenolic antioxidant is selected from 2,2'-oxalyldiamidobisethyl-3-(3-,5-di-tert-butyl-4-hydroxyphenyl)propionate and amides of beta-(3,5-di-tert-butyl-4-hydroxy-phenyl)propionic acid.

**16.** The composition of Claims 13 or 14 wherein the amide-containing phenolic antioxidant is N,N'-hexamethylene bis(3,5-di-tert-butyl-4-hydroxy-hydrocinnamide).

**17.** The composition of Claim 14 wherein the non-amide-containing antioxidant is a sterically hindered phenolic antioxidant.

**18.** The composition of Claim 17 wherein the sterically hindered phenolic antioxidant is selected from triethylene glycol bis(3-(3'-tert-butyl-4'-hydroxy-5'-methylphenyl)propionate);
tetrakis(methylene(3,5-di-tert-butyl-4-hydroxyhydrocinnamate))methane;
tris(methylene(3,5-di-tert-butyl-4-hydroxyphenyl)-1,3, 5-cyanuric acid; and
1-octadecanol(3,5-di-tert-butyl-4-hydroxyhydrocinnamate).

**19.** A thermoplastic polyacetal composition consisting essentially of

(a) 0.05-3.0 weight pe cent of at least one polymer stabilizer which does not melt at the processing temperature of the polyacetal polymer or which has a melt flow rate ASTM-D1238 of less than one-tenth of the melt flow rate of the polyacetal polymer and which is selected from the group consisting of polymers containing both formaldehyde reactive hydroxyl groups and formaldehyde reactive nitrogen groups, provided that the atoms in the backbone of the polymer to which the formaldehyde reactive groups are attached, directly or indirectly, are separated from each other, on average, by not more than twenty chain atoms, and further provided that the amount of the formaldehyde reactive nitrogen groups attached, directly or indirectly, to the atoms which are in the backbone of the polymer is at least three times as great as the amount of formaldehyde reactive nitrogen groups present in the backbone of the polymer, the formaldehyde reactive nitrogen groups being comprised of a nitrogen atom having attached thereto one or two hydrogen atoms,
(b) 0.01-1.0 weight percent of at least one co-stabilizer compound which has a melting point or glass transition temperature less than the temperature at which the polyacetal is melt-processed or a melt flow rate greater than the one-tenth that of the polyacetal at the temperature at which the polyacetal is melt-processed,
(c) 0.02-1.0 weight percent of at least one primary antioxidant, and
(d) 95-99.92 weight percent of at least one polyacetal polymer,

provided that the above-stated percentages are based on the total amount of components (a), (b), (c), and (d) only and further provided that the polymer of component (a) has a number average particle size in the composition of less than 10 microns.

**20.** The composition of Claim 19 wherein the component (b) co-stabilizer compound is a polyacetal thermal stabilizer selected from the group consisting of polyamides, amide-containing compounds, urethanes, ureas, amine-containing compounds, and hydroxy-containing compounds.

**21.** The composition of Claim 20 wherein the amide-containing compound co-stabilizer compound is a polyamide.

**22.** The composition of Claim 21 wherein the polyamide is a 33/23/43 weight percent terpolymer of nylon 66, nylon 6/10, and nylon 6, respectively.

**23.** The composition of Claim 19 wherein the component (b) co-stabilizer compound is a hydroxy-containing polymer or oligomer wherein the atoms in the backbone of the polymer or oligomer to which the hydroxy groups are attached, directly or indirectly, are separated from each other, on average, by not more than twenty chain atoms and wherein the hydroxy-containing polymer or oligomer is substantially free of acidic materials.

**24.** The composition of Claim 23 wherein the hydroxy-containing polymer or oligomer is selected from the group consisting of poly(vinyl alcohol), poly(ethylene vinyl alcohol), hydroxyesters of poly(meth)acrylates, and vinyl alcohol/methylmethacrylate copolymers.

**25.** The conposition of Claim 24 wherein the hydroxy-containing polymer is poly(ethylene vinyl alcohol).

**26.** The composition of Claim 19 wherein the component (c) primary antioxidant is selected from amides of beta-(3,5-di-tert-butyl-4-hydroxyphenyl) propionic acid; 2,2'-oxalyldiamidobisethyl-3-(3,5-di-tert-butyl-4-hydroxyphenyl) propionate; triethylene glycol bis(3-(3'-tert-butyl-4'-hydroxy-5'-methylphenyl) propionate); and tetrakis(methylene (3,5-di-tert-butyl-4-hydroxyhydrocinnamate)) methane.

**27.** The composition of Claim 19 wherein the primary antioxidant is N,N'-hexamethylene bis(3,5-di-tert-butyl-4-hydroxy-hydrocinnamide).

**28.** The composition of Claim 1 wherein the primary antioxidant is a mixture of more than one primary antioxidant.

**29.** The composition of Claims 13 or 19 wherein the component (a) polymer stabilizer is polyacrylamide or polymethacrylamide.

**30.** The composition of Claims 13 or 19 wherein the component (a) non-meltable polymer stabilizer is polyacrylamide.

**31.** The composition of Claims 1, 13, or 19 wherein the polyacetal polymer is a homopolymer.

**32.** The composition of Claims 1, 13, or 19 wherein the polyacetal polymer is a copolymer.

**33.** The composition of Claims 1, 13, or 19 wherein the polyacetal polymer has a number average molecular weight of 10,000-100,000.

**34.** The composition of Claims 1, 13, or 19 further comprising at least one of co-stabilizers, antioxidants, pigments, colorants, reinforcing agents, toughening agents, uv stabilizers, hindered amine stabilizers, nucleating agents, lubricants, glass fibers, and fillers.

**35.** The composition of Claims 1, 13, or 19 further comprising at least one of polytetrafluoroethylene powder, polytetrafluoroethylene fiber, and silicone oil.

**36.** Shaped articles made from the composition of Claims 1, 13, or 19.

**37.** A method of preparing the composition of Claims 1, 13, or 19 comprising mixing the stabilizer component(s) with the polyacetal polymer at a temperature above the melting point of the polyacetal polymer and below the temperature at which degradation of the components will occur.

**Patentansprüche**

**1.** Thermoplastische Polyacetalzusammensetzung, bestehend im wesentlichen aus

(a) 0,05 bis 5 Gew.-% eines Stabilisators, ausgewählt aus der Gruppe bestehend aus mikrokristalliner Cellulose und faserförmiger Cellulose,
(b) 0,05 bis 4 Gew.-% wenigstens einer Costabilisatorverbindung, ausgewählt aus der Gruppe bestehend aus Polyamiden, hydroxyhaltigen Polymeren, hydroxyhaltigen Oligomeren, hydroxyhaltigen Polymeren, die auch wenigstens eine andere funktionelle Gruppe enthalten, die eine stärkere Lewisbase ist als die Hydroxygruppen, und hydroxyhaltige Oligomere, die auch wenigstens eine andere funktionelle Gruppe enthalten, die eine stärkere Lewisbase ist als die Hydroxygruppen, wobei die hydroxyhaltigen Polymeren oder Oligomeren einen Schmelzpunkt oder eine Glasübergangstemperatur aufweisen, die geringer ist als die Temperatur, bei der das Polyacetal in der Schmelze verarbeitet wird, oder die eine Schmelzflußgeschwindigkeit, gemessen gemäß ASTM-D 1238, aufweisen, die größer ist als ein Zehntel derjenigen des Polyacetals bei der Temperatur, bei der das Polyacetal in der Schmelze verarbeitet wird, und
c) 91,0 bis 99,0 Gew.-% wenigstens eines Polyacetalpolymeren,

mit der Maßgabe, daß der Stabilisator von Komponente (a) eine durchschnittliche Teilchengröße von 100 Mikron oder weniger aufweist, mit den weiteren Maßgaben, daß die Atome im Grundgerüst der hydroxyhaltigen Polymeren oder Oligomeren der Komponente (b), an welchen die Hydroxygruppen direkt oder indirekt hängen, durch nicht mehr als 20 Kettenatome voneinander getrennt sind, und daß die Komponente (b) im wesentlichen frei von sauren Materialien ist, und mit der weiteren Maßgabe, daß die oben angegebenen Prozente nur auf das Gesamtgewicht

der Komponenten (a), (b) und (c) bezogen sind.

2. Zusammensetzung nach Anspruch 1, bei welcher eine wässrige Suspension von 1 bis 10 Gew.-% an Cellulosestabilisator gemäß Komponente (a) einen pH-Wert von 5,8 bis 8 besitzt.

3. Zusammensetzung nach Anspruch 1, bei welcher das Polyacetalpolymere der Komponente (c) ein Homopolymeres ist, eine wässrige Suspension von 1 bis 10 Gew.-% Cellulosestabilisator der Komponente (a) einen pH-Wert 5,5-7 aufweist und die Costabilisatorverbindung der Komponente (b) im wesentlichen frei von sauren und basischen Materialien ist.

4. Zusammensetzung nach Anspruch 1, bei welcher der Cellulosestabilisator der Komponente (a) mikrokristalline Cellulose mit einer durchschnittlichen Teilchengröße von 50 Mikron oder weniger ist.

5. Zusammensetzung nach Anspruch 1, bei welcher der Cellulosestabilisator der Komponente (a) mikrokristalline Cellulose mit einer durchschnittlichen Teilchengröße von 25 Mikron oder weniger ist.

6. Zusammensetzung nach Anspruch 1, bei welcher der Cellulosestabilisator der Komponente (a) mikrokristalline Cellulose mit einer durchschnittlichen Teilchengröße von 10 Mikron oder weniger ist.

7. Zusammensetzung nach Anspruch 1, bei welcher der Cellulosestabilisator der Komponente (a) faserförmige Cellulose ist.

8. Zusammensetzung nach Anspruch 7, bei welcher die faserförmige Cellulose von celluloseproduzierenden Bakterien abgeleitet ist.

9. Zusammensetzung nach Anspruch 1, bei welcher die Costabilisatorverbindungskomponente (b) ein Polyamid ist.

10. Zusammensetzung nach Anspruch 9, bei welcher das Polyamid ausgewählt ist aus der Gruppe bestehend aus (a) 33/23/43-Terpolymeren von Nylon 66, Nylon 6/10 bzw. Nylon 6, (b) Nylon 6/6 dispergiert in einem Trägerharz, und (c) 85/15-Copolymeren von Nylon 66/Nylon 6, dispergiert in einem Trägerharz.

11. Zusammensetzung nach Anspruch 1, bei welcher die Costabilisatorverbindung der Komponente (b) ein hydroxyhaltiges Polymeres oder ein hydroxyhaltiges Oligomeres ist.

12. Zusammensetzung nach Anspruch 11, bei welcher das hydroxyhaltige Polymere Poly(ethylvinylalkohol) ist.

13. Thermoplastische Polyacetalzusammensetzung, bestehend im wesentlichen aus

(a) 0,05 bis 3,0 Gew.-% wenigstens eines Polymerstabilisators, der bei der Verarbeitungstemperatur des Polyacetalpolymeren nicht schmilzt, oder der eine Schmelzflußgeschwindigkeit (ASTM-D 1238) von weniger als einem Zehntel der Schmelzflußgeschwindigkeit des Polyacetalpolymeren besitzt, und welcher ausgewählt ist aus der Gruppe bestehend aus Polymeren, die formaldehydreaktive Hydroxylgruppen enthalten, Polymeren, die formaldehydreaktive Stickstoffgruppen enthalten, und Polymeren, die sowohl formaldehydreaktive Hydroxylgruppen als auch formaldehydreaktive Stickstoffgruppen enthalten, mit der Maßgabe, daß die Atome im Grundgerüst des Polymeren, an welchen die formaldehydreaktiven Gruppen direkt oder indirekt hängen, durchschnittlich durch nicht mehr als zwanzig Kettenatome voneinander getrennt sind, und mit der weiteren Maßgabe, daß die Menge an formaldehydreaktiven Stickstoffgruppen, die direkt oder indirekt an den im Grundgerüst befindlichen Atomen des Polymeren hängen, wenigstens dreimal so groß ist wie die Menge an formaldehydreaktiven Stickstoffgruppen, die sich im Grundgerüst des Polymeren befinden, wobei die formaldehydreaktiven Stickstoffgruppen aus einem Stickstoffatom mit ein oder zwei anhängenden Wasserstoffatomen bestehen,
b) 0,02 bis 1,00 Gew.-% wenigstens einen amidhaltigen phenolischen Antioxidans, und
c) 96 bis 99,93 Gew.-% wenigstens eines Polyacetalpolymeren,

mit der Maßgabe, daß die oben angegebenen Prozente nur auf die Gesamtmenge der Komponenten (a), (b) und (c) bezogen sind, und mit der weiteren Maßgabe, daß das Polymere der Komponente (a) eine zahlendurchschnittliche Teilchengröße in der Zusammensetzung von weniger als 10 Mikron aufweist.

**14.** Zusammensetzung nach Anspruch 13, welche weiterhin aus 0,05 bis 0,50 Gew.-% wenigstens eines nichtamidhaltigen Antioxidans besteht, wobei der genannte Gewichtsprozentwert auf das Gewicht des Polymerstabilisators, des Polyacetalpolymeren, des nichtamidhaltigen Antioxidans und des amidhaltigen Antioxidans bezogen ist.

**15.** Zusammensetzung nach den Ansprüchen 13 oder 14, bei welcher das amidhaltige phenolische Antioxidans ausgewählt ist unter 2/2'-Oxalyldiaminobisethyl-3-(3,5-di-tert.-butyl-4-hydroxyphenyl)propionat und Amiden von beta-(3,5-Di-tert.-butyl-4-hydroxyphenyl)propionsäure.

**16.** Zusammensetzung nach den Ansprüchen 13 oder 14, in welcher das amidhaltige phenolische Antioxidans N,N'-Hexamethylen-bis(3,5-di-tert.-butyl-4-hydroxyhydrocinnamid) ist.

**17.** Zusammensetzung nach Anspruch 14, in welcher das nichtamidhaltige Antioxidans ein sterisch gehindertes phenolisches Antioxidans ist.

**18.** Zusammensetzung nach Anspruch 17, in welcher das sterisch gehinderte phenolische Antioxidans ausgewählt ist unter Triethylenglykol-bis(3-(3'-tert.-butyl-4'-hydroxy-5'-methylphenyl)propionat);
Tetrakis(methylen(3,5-di-tert.-butyl-4-hydroxyhydrocinnamat)methan;
Tris(methylen(3,5-di-tert.-butyl-4-hydroxyphenyl)-1,3,5-cyanursäure; und
1-Octadecanol(3,5-di-tert.-butyl-4-hydoxyhydrocinnamat).

**19.** Thermoplastische Polyacetalzusammensetzungen, bestehend im wesentlichen aus

(a) 0,05 bis 3.0 Gew.-% wenigstens eines Polymerstabilisators, der bei der Verarbeitungstemperatur des Polyacetalpolymeren nicht schmilzt oder eine Schmelzflußgeschwindigkeit (ASTM-D 1238) von weniger als einem Zehntel der Schmelzflußgeschwindigkeit des Polyacetalpolymeren aufweist, und welcher ausgewählt ist aus der Gruppe bestehend aus Polymeren, die sowohl formaldehydreaktive Hydroxylgruppen als auch formaldehydreaktive Stickstoffgruppen enthalten, mit der Maßgabe, daß die Atome im Grundgerüst des Polymeren, an welchen die formaldehydreaktiven Gruppen direkt oder indirekt hängen, durchschnittlich durch nicht mehr als zwanzig Kettenatome voneinander getrennt sind, und mit der weiteren Maßgabe, daß die Menge an formaldehydreaktiven Stickstoffgruppen, die direkt oder indirekt an den Atomen hängen, die sich im Grundgerüst des Polymeren befinden, wenigstens dreimal so groß ist wie die Menge an formaldehydreaktiven Stickstoffgruppen, die im Grundgerüst des Polymeren vorliegen, wobei die formaldehydreaktiven Stickstoffgruppen aus einem Stickstoffatom und einem oder zwei anhängenden Wasserstoffatomen bestehen,
(b) 0,01-1,0 Gew.-% wenigstens einer Costabilisatorverbindung, die einen Schmelzpunkt oder eine Glasübergangstemperatur aufweist, die geringer ist als die Temperatur, bei der das Polyacetal in der Schmelze verarbeitet wird, oder die eine Schmelzflußgeschwindigkeit aufweist, die größer als ein Zehntel derjenigen des Polyacetals bei der Temperatur ist, bei der das Polyacetal in der Schmelze verarbeitet wird,
(c) 0,02 bis 1,0 Gew.-% wenigstens eines primären Antioxidans, und
(d) 95 bis 99,92 Gew.-% wenigstens eines Polyacetalpolymeren,

mit der Maßgabe, daß die oben angegebenen Prozente nur auf das Gesamtgewicht der Komponenten (a), (b), (c) und (d) bezogen sind, und mit der weiteren Maßgabe, daß das Polymere der Komponente (a) eine zahlendurchschnittliche Teilchengröße in der Zusammensetzung von weniger als 10 Mikron aufweist.

**20.** Zusammensetzung nach Anspruch 19, bei welcher die Costabilisatorverbindung der Komponente (b) ein thermischer Polyacetalstabilisator ist, der ausgewählt ist aus der Gruppe bestehend aus Polyamiden, amidhaltigen Verbindungen, Urethanen, Harnstoffen, aminhaltigen Verbindungen und hydroxyhaltigen Verbindungen.

**21.** Zusammensetzung nach Anspruch 20, in welcher die amidhaltige Verbindung als Costabilisatorverbindung ein Polyamid ist.

**22.** Zusammensetzung nach Anspruch 21, in welcher das Polyamid ein 33/23/43 Gew.-% Terpolymeres von Nylon 66, Nylon 6/10 bzw. Nylon 6 ist.

**23.** Zusammensetzung nach Anspruch 19, in welcher die Costabilisatorverbindung der Komponente (b) ein hydroxyhaltiges Polymeres oder Oligomeres ist, bei welchen die Atome im Grundgerüst des Polymeren oder Oligomeren, an welchen die Hydroxygruppen direkt oder indirekt hängen, im Durchschnitt durch nicht mehr als 20 Kettenatome voneinander getrennt sind, und wobei das hydroxyhaltige Polymere oder Oligomere im wesentlichen von sauren

Materialien frei ist.

24. Zusammensetzung nach Anspruch 23, in welcher das hydroxyhaltige Polymere oder Oligomere ausgewählt ist aus der Gruppe bestehend aus Poly(vinylalkohol), Poly(ethylenvinylalkohol), Hydroxyestern von Poly(meth)acrylaten und Vinylalkohol/Methylmethacrylat-Copolymeren.

25. Zusammensetzung nach Anspruch 24, in welcher das hydroxyhaltige Polymere Poly(ethylenvinylalkohol) ist.

26. Zusammensetzung nach Anspruch 19, in welcher das primäre Antioxidans der Komponente (c) ausgewählt ist unter Amiden der beta-(3,5-Di-tert.-butyl-4-hydroxyphenyl)propionsäure; 2,2'-Oxalyldiaminobisethyl-3-(3,5-di-tert.-butyl-4-hydroxyphenyl)propionat; Triethylenglykol-bis(3-(3'-tert.-butyl-4'-hydroxy-5'-methylphenyl)propionat); und Tetrakis(methylen-(3,5-di-tert.-butyl-4-hydroxyhydrocinnamat))methan.

27. Zusammensetzung nach Anspruch 19, in welcher das primäre Antioxidans N,N'-Hexamethylen-bis(3,5-di-tert.-butyl-4-hydroxyhydrocinnamid) ist.

28. Zusammensetzung nach Anspruch 1, in welcher das primäre Antioxidans eine Mischung von mehr als einem primären Antioxidans ist.

29. Zusammensetzung nach den Ansprüchen 13 oder 19, in welcher der Polymerstabilisator der Komponente (a) Polyacrylamid oder Polymethacrylamid ist.

30. Zusammensetzung nach den Ansprüchen 13 oder 19, in welcher der nichtschmelzbare Polymerstabilisator der Komponente (a) Polyacrylamid ist.

31. Zusammensetzung nach den Ansprüchen 1, 13 oder 19, in welcher das Polyacetalpolymere ein Homopolymeres ist.

32. Zusammensetzung nach den Ansprüchen 1, 13 oder 19, in welcher das Polyacetalpolymere ein Copolymeres ist.

33. Zusammensetzung nach den Ansprüchen 1, 13 oder 19, in welcher das Polyacetalpolymere ein zahlendurchschnittliches Molekulargewicht von 10 000 bis 100 000 besitzt.

34. Zusammensetzung nach den Ansprüchen 1, 13 oder 19, welche weiterhin wenigstens einen Stoff enthält aus der Gruppe der Costabilisatoren, Antioxidantien, Pigmente, Farbstoffe, Verstärkungsmittel, Zähigmacher, UV-Stabilisatoren, gehinderte Aminstabilisatoren, Keimbildungsmittel, Schmiermittel, Glasfasern und Füllstoffe.

35. Zusammensetzung nach den Ansprüchen 1, 13 oder 19, welche zusätzlich wenigstens einen Stoff enthält aus der Gruppe Polytetrafluorethylenfasern und Silikonöl.

36. Formgegenstände, hergestellt aus der Zusammensetzung der Ansprüche 1, 13 oder 19.

37. Verfahren zur Herstellung der Zusammensetzung der Ansprüche 1, 13 oder 19, umfassend das Vermischen der Stabilisatorverbindung(en) mit dem Polyacetalpolymeren bei einer Temperatur oberhalb des Schmelzpunkts des Polyacetalpolymeren und unterhalb der Temperatur, bei der ein Abbau der Komponenten auftreten würde.

**Revendications**

1. Une composition de polyacétal thermoplastique constituée essentiellement de :

(a) 0,05 à 5 pour cent en poids d'un stabilisant choisi dans la classe formée par la cellulose microcristalline et la cellulose fibreuse,
(b) 0,05 à 4 pour cent en poids d'au moins un composé co-stabilisant choisi dans la classe formée par les polyamides, les polymères hydroxylés, les oligomères hydroxylés, les polymères hydroxylés qui contiennent également au moins un autre groupe fonctionnel qui est une base de Lewis plus forte que les groupes hydroxyle, et les oligomères hydroxylés qui contiennent également au moins un autre groupe fonctionnel qui est

une base de Lewis plus forte que les groupes hydroxyle, les polymères ou oligomères hydroxylés ayant un point de fusion ou une température de transition vitreuse inférieur à la température à laquelle le polyacétal est mis en oeuvre par fusion ou un indice de fluidité, mesuré selon la norme ASTM D-1238, supérieur au dixième de celui du polyacétal à la température à laquelle le polyacétal est mis en oeuvre par fusion, et
(c) 91,0 à 99,9 pour cent en poids d'au moins un polyacétal,

à condition que le stabilisant du composant (a) ait une taille moyenne de particules de 100 micromètres ou moins, à condition encore que les atomes du squelette des polymères ou oligomères hydroxylés du composant (b) auxquels les groupes hydroxyle sont attachés directement ou indirectement ne soient pas séparés par plus de vingt atomes de chaîne et que le composant (b) soit sensiblement exempt de substances acides, et à condition encore que les pourcentages susmentionnés soient exprimés par rapport à la quantité totale des composants (a), (b) et (c) seulement.

**2.** La composition de la revendication 1, dans laquelle une suspension aqueuse de 1 à 10 % en poids de stabilisant cellulosique du composant (a) a un pH de 5,5 à 8.

**3.** La composition de la revendication 1, dans laquelle le polyacétal du composant (c) est un homopolymère, une suspension aqueuse de 1 à 10 % en poids du stabilisant cellulosique du composant (a) a un pH de 5,5 à 7, et le composé co-stabilisant du composant (b) est sensiblement exempt de substances acides et de substances basiques.

**4.** La composition de la revendication 1, dans laquelle le stabilisant cellulosique du composant (a) est une cellulose microcristalline ayant une taille moyenne de particules de 50 micromètres ou moins.

**5.** La composition de la revendication 1, dans laquelle le stabilisant cellulosique du composant (a) est une cellulose microcristalline ayant une taille moyenne de particules de 25 micromètres ou moins.

**6.** La composition de la revendication 1, dans laquelle le stabilisant cellulosique du composant (a) est une cellulose microcristalline ayant une taille moyenne de particules de 10 micromètres ou moins.

**7.** La composition de la revendication 1, dans laquelle le stabilisant cellulosique du composant (a) est une cellulose fibreuse.

**8.** La composition de la revendication 7, dans laquelle la cellulose fibreuse provient de bactéries productrices de cellulose.

**9.** La composition de la revendication 1, dans laquelle le composé co-stabilisant du composant (b) est un polyamide.

**10.** La composition de la revendication 9, dans laquelle le polyamide est choisi dans la classe formée par (a) les terpolymères à 33/23/43 de nylon 6-6, nylon 6-10 et nylon 6, respectivement, (b) le nylon 6-6 dispersé dans une résine porteuse et (c) les copolymères à 85/15 de nylon 6-6/nylon 6, respectivement, dispersés dans une résine porteuse.

**11.** La composition de la revendication 1, dans laquelle le composé co-stabilisant du composant (b) est un polymère hydroxylé ou un oligomère hydroxylé.

**12.** La composition de la revendication 11, dans laquelle le polymère hydroxylé est un poly(éthylène-alcool vinylique).

**13.** Une composition de polyacétal thermoplastique constituée essentiellement de

(a) 0,05 à 3,0 pour cent en poids d'au moins un stabilisant polymère qui ne fond pas à la température de mise en oeuvre du polyacétal ou qui a un indice de fluidité selon la norme ASTM D-1238 inférieur au dixième de l'indice de fluidité du polyacétal et qui est choisi dans la classe formée par les polymères contenant des groupes hydroxyle réactifs avec le formaldéhyde, les polymères contenant des groupes azotés réactifs avec le formaldéhyde et les polymères contenant à la fois des groupes hydroxyle réactifs avec le formaldéhyde et des groupes azotés réactifs avec le formaldéhyde, à condition que les atomes du squelette du polymère auxquels les groupes réactifs avec le formaldéhyde sont attachés directement ou indirectement ne soient pas séparés les uns des autres par, en moyenne, plus de vingt atomes de chaîne, et à condition encore que la quantité de

groupes azotés réactifs avec le formaldéhyde attachés, directement ou indirectement, aux atomes qui sont dans le squelette du polymère soit au moins trois fois plus grande que la quantité de groupes azotés réactifs avec le formaldéhyde présents dans le squelette du polymère, les groupes azotés réactifs avec le formaldéhyde étant formés d'un atome d'azote auquel sont fixés un ou deux atomes d'hydrogène,
(b) 0,02 à 1,00 pour cent en poids d'au moins un antioxydant phénolique amidé, et
(c) 96 à 99,93 pour cent en poids d'au moins un polyacétal,

à condition que les pourcentages susmentionnés soient exprimés par rapport à la quantité totale des composants (a), (b) et (c) seulement, et à condition encore que le polymère du composant (a) ait une taille de particules moyenne en nombre inférieure à 10 micromètres dans la composition.

**14.** La composition de la revendication 13, comprenant de plus 0,05 à 0,50 pour cent en poids d'au moins un antioxydant non amidé, ledit pourcentage en poids étant exprimé par rapport au poids du stabilisant polymère, du polyacétal, de l'antioxydant non amidé et de l'antioxydant amidé.

**15.** La composition de la revendication 13 ou 14, dans laquelle l'antioxydant phénolique amidé est choisi parmi le 2,2'-oxalyldiamidobiséthyl-3-(3,5-di-*tert*-butyl-4-hydroxyphényl)propionate et les amides de l'acide bêta(3,5-di-*tert*-butyl-4-hydroxyphényl) propionique.

**16.** La composition de la revendication 13 ou 14, dans laquelle l'antioxydant phénolique amidé est le N,N'-hexaméthylène-bis(3,5-di-*tert*-butyl-4-hydroxyhydrocinnamide).

**17.** La composition de la revendication 14, dans laquelle l'antioxydant non amidé est un antioxydant phénolique à empêchement stérique.

**18.** La composition de la revendication 17, dans laquelle l'antioxydant phénolique à empêchement stérique est choisi parmi le bis [3-(3'- *tert*-butyl-4'-hydroxy-5'-méthylphényl)propionate] de triéthylène-glycol ; le tétrakis(3,5-di-*tert*-butyl-4-hydroxyhydrocinnamate de méthylène)méthane ; l'acide trisméthylène(3,5-di-*tert*-butyl-4-hydroxyphényl)-1,3,5-cyanurique ; et le 3,5-di-*tert*-butyl-4-hydroxyhydrocinnamate de 1-octadécanol.

**19.** Une composition de polyacétal thermoplastique constituée essentiellement de

(a) 0,05 à 3,0 pour cent en poids d'au moins un stabilisant polymère qui ne fond pas à la température de mise en oeuvre du polyacétal ou qui a un indice de fluidité selon la norme ASTM D-1238 inférieur au dixième de l'indice de fluidité du polyacétal et qui est choisi dans la classe formée par les polymères contenant à la fois des groupes hydroxyle réactifs avec le formaldéhyde et des groupes azotés réactifs avec le formaldéhyde, à condition que les atomes du squelette du polymère auxquels les groupes réactifs avec le formaldéhyde sont attachés directement ou indirectement ne soient pas séparés les uns des autres par, en moyenne, plus de vingt atomes de chaîne, et à condition encore que la quantité de groupes azotés réactifs avec le formaldéhyde attachés directement ou indirectement aux atomes qui sont dans le squelette du polymère soit au moins trois fois plus grande que la quantité de groupes azotés réactifs avec le formaldéhyde présents dans le squelette du polymère, les groupes azotés réactifs avec le formaldéhyde étant formés d'un atome d'azote auquel sont fixé un ou deux atomes d'hydrogène,
(b) 0,01 à 1,0 pour cent en poids d'au moins un composé co-stabilisant qui a un point de fusion ou une température de transition vitreuse inférieur à la température à laquelle le polyacétal est mis en oeuvre par fusion ou un indice de fluidité supérieur au dixième de celui du polyacétal à la température à laquelle le polyacétal est mis en oeuvre par fusion,
(c) 0,02 à 1,0 pour cent en poids d'au moins un antioxydant primaire, et
(d) 95 à 99,92 pour cent en poids d'au moins un polyacétal,

à condition que les pourcentages susmentionnés soient exprimés par rapport à la quantité totale des composants (a), (b), (c) et (d) seulement et à condition encore que le polymère du composant (a) ait une taille de particules moyenne en nombre inférieure à 10 micromètres dans la composition.

**20.** La composition de la revendication 19, dans laquelle le composé co-stabilisant du composant (b) est un stabilisant à la chaleur pour polyacétal, choisi dans la classe formée par les polyamides, les composés amidés, les uréthannes, les urées, les composés aminés et les composés hydroxylés.

**21.** La composition de la revendication 20, dans laquelle le composé amidé utilisé comme composé co-stabilisant est un polyamide.

**22.** La composition de la revendication 21, dans laquelle le polyamide est un terpolymère à 33/23/43 pour cent en poids de nylon 6-6, nylon 6-10 et nylon 6, respectivement.

**23.** La composition de la revendication 19, dans laquelle le composé co-stabilisant du composant (b) est un polymère ou oligomère hydroxylé dans lequel les atomes du squelette du polymère ou de l'oligomère auxquels les groupes hydroxyle sont attachés directement ou indirectement ne sont pas séparés les uns des autres par, en moyenne, plus de vingt atomes de chaîne et le polymère ou oligomère hydroxylé est sensiblement exempt de substances acides.

**24.** La composition de la revendication 23, dans laquelle le polymère ou l'oligomère hydroxylé est choisi dans la classe formée par l'alcool polyvinylique, un poly(éthylène-alcool vinylique), des hydroxyesters de poly(méth)acrylates et des copolymères alcool vinylique/méthacrylate de méthyle.

**25.** La composition de la revendication 24, dans laquelle le polymère hydroxylé est un poly(éthylène-alcool vinylique).

**26.** La composition de la revendication 19, dans laquelle l'antioxydant primaire du composant (c) est choisi parmi les amides d'acide bêta(3,5-di-*tert*-butyl-4hydroxyphényl)propionique ; le 2,2'-oxalyldiamidobiséthyl-3-(3,5-di-*tert*-butyl-4-hydroxyphényl)propionate] ; le bis [3-(3'-*tert*-butyl-4'-hydroxy-5'-méthylphényl)propionate] de triéthylèneglycol ; et le tétrakis(3,5-di-*tert*-butyl-4-hydroxyhydrocinnamate de méthylène)méthane.

**27.** La composition de la revendication 19, dans laquelle l'antioxydant primaire est le N,N'-hexaméthylène-bis(3,5-di-*tert*-butyl-4-hydroxyhydrocinnamide).

**28.** La composition de la revendication 1, dans laquelle l'antioxydant primaire est un mélange de plus d'un antioxydant primaire.

**29.** La composition des revendications 13 ou 19, dans laquelle le stabilisant polymère du composant (a) est un polyacrylamide ou polyméthacrylamide.

**30.** La composition des revendications 13 ou 19, dans laquelle le stabilisant polymère infusible du composant (a) est un polyacrylamide.

**31.** La composition des revendications 1, 13 ou 19, dans laquelle le polyacétal est un homopolymère.

**32.** La composition des revendications 1, 13 ou 19, dans laquelle le polyacétal est un copolymère.

**33.** La composition des revendications 1, 13 ou 19, dans laquelle le polyacétal a un poids moléculaire moyen en nombre de 10 000 à 100 000.

**34.** La composition des revendications 1, 13 ou 19, comprenant de plus l'un au moins de co-stabilisants, antioxydants, pigments, colorants, agents de renforcement, agents améliorant la ténacité, stabilisants à la lumière UV, stabilisants du type amine à empêchement stérique, agents de nucléation, lubrifiants, fibres de verre et charges.

**35.** La composition des revendications 1, 13 ou 19, comprenant de plus l'une au moins d'une poudre de polytétrafluoréthylène, d'une fibre de polytétrafluoréthylène et d'une huile de silicone.

**36.** Articles façonnés, fabriqués à partir de la composition des revendications 1, 13 ou 19.

**37.** Un procédé de préparation de la composition des revendications 1, 13 ou 19, consistant à mélanger le ou les composants stabilisants avec le polyacétal à une température supérieure au point de fusion du polyacétal et inférieure à la température à laquelle apparaît une dégradation des composants.